(19) Europäisches Patentamt / European Patent Office / Office européen des brevets

(11) **EP 3 502 075 B1**

(12) **EUROPÄISCHE PATENTSCHRIFT**

(45) Veröffentlichungstag und Bekanntmachung des Hinweises auf die Patenterteilung:
**27.10.2021 Patentblatt 2021/43**

(51) Int Cl.:
*C03C 10/00* (2006.01)   *C03C 17/23* (2006.01)
*C03C 17/22* (2006.01)

(21) Anmeldenummer: **18213353.8**

(22) Anmeldetag: **18.12.2018**

(54) **ABDECKPLATTE MIT SCHWARZER, FARBNEUTRALER BESCHICHTUNG**

COVER PLATE WITH BLACK COLOUR-NEUTRAL COATING

PLAQUE DE COUVERTURE POURVU DE REVÊTEMENT NOIRE NEUTRE AU NIVEAU DE LA COULEUR

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **22.12.2017 DE 102017131152**
**07.05.2018 DE 102018110909**

(43) Veröffentlichungstag der Anmeldung:
**26.06.2019 Patentblatt 2019/26**

(73) Patentinhaber: **SCHOTT AG**
**55122 Mainz (DE)**

(72) Erfinder:
• **HENN, Christian**
**55546 Frei-Laubersheim (DE)**
• **DAMM, Thorsten**
**65343 Eltville am Rhein (DE)**
• **BACK, Franziska**
**55288 Udenheim (DE)**
• **MENKE-BERG, Yvonne**
**65197 Wiesbaden (DE)**

(56) Entgegenhaltungen:
DE-A1-102008 050 263    DE-A1-102009 013 127
DE-U1-202011 110 029

EP 3 502 075 B1

**Beschreibung**

Die Erfindung betrifft farbneutrale Abdeckmittel für Einrichtungs- oder Ausstattungsgegenstände für Küchen oder Labore, umfassend ein Glasoder Glaskeramiksubstrat und eine Beschichtung auf einer Seite des Glasoder Glaskeramiksubstrats.

In Einrichtungs- und Ausstattungsgegenständen für Küchen und Laboren kommen Abdeckmittel aus Glas oder Glaskeramik in vielfältiger Weise zum Einsatz. Je nach Anforderungen beispielsweise an die chemische oder thermische Beständigkeit oder die optischen Eigenschaften werden hierfür unterschiedliche Gläser oder Glaskeramiken ausgewählt.

So finden sich beispielsweise Abdeckmittel aus Glas oder Glaskeramik als Sichtfenster in Türen von Öfen, Kühlschränken und Mikrowellengeräten, als Frontscheibe von Bedienelementen von Kochgeräten und Kaffeemaschinen, als Kochfeld, als Arbeitsplatte eines Küchen- oder Labormöbels wie beispielsweise Schränken und Tischen, sowohl im privaten als auch im professionellen Umfeld.

Solche Abdeckmittel weisen in der Regel zumindest teilflächig eine Beschichtung auf, um den Durchblick durch das Abdeckmittel beispielsweise auf dahinter verbaute mechanische oder elektronische Komponenten zu verdecken. Gleichzeitig sollen sie aber Licht, dass von solchen Komponenten, beispielsweise LEDs oder Displays, emittiert wird, möglichst ungehindert durchlassen. Insbesondere soll der Farbort des transmittierten Lichts möglichst wenig verändert werden.

Aus der DE 10 2016 103 524 A1 ist ein Glas- oder Glaskeramikartikel bekannt, der eine blickdichte Beschichtung mit einem Lichttransmissionsgrad von höchstens 5 % aufweist. Um Licht von hinter der Beschichtung angeordneten Leuchtelementen in ausreichendem Maße durchzulassen, weist diese Beschichtung ein Raster von Öffnungen auf, durch die das Licht ungehindert hindurchtreten kann. Die Farbneutralität einer solchen Lösung ist zwar hervorragend, da der Farbort des durch die Öffnungen tretenden Lichts nicht verändert wird, dafür weist diese Lösung andere Nachteile auf. Die Öffnungen müssen sehr fein gewählt werden, damit bei ausgeschaltetem Zustand des Leuchtmittels der Durchblickschutz, den das Abdeckmittel bereitstellen soll, weiterhin gewährleistet ist. Solche feinen Öffnungen sind jedoch nur aufwändig nachträglich mittels eines Laserverfahrens herstellbar. Darüber hinaus liegen die Größen und Abstände solcher Öffnungen in derselben Größenordnung wie die Pixel von Anzeigeelementen, was bei Verwendung von Anzeigeelementen unter einer solchen Beschichtung mit entsprechenden Öffnungen zu einem Verlust an Bildqualität aufgrund des auftretenden Moire-Effekts bzw. aufgrund einer zusätzlichen Verpixelung der dargestellten Anzeige durch die Anordnung der Öffnungen führt.

In der US 2007108184 A1 wird eine transparente nicht eingefärbte Platte aus Glaskeramik offenbart, die als Kochfeld verwendet werden kann und die an ihrer Unterseite eine metallische Beschichtung aus gesputtertem Titan aufweist. Diese Schicht weist einen inhomogenen Transmissionsverlauf auf, sodass der spektrale Transmissionsgrad für rotes Licht größer ist als für blaues oder grünes Licht. Die so beschichtete Platte aus Glaskeramik ist für transmittiertes Licht also nicht farbneutral.

Darüber hinaus weist sie eine metallische Anmutung auf und ist aufgrund der Leitfähigkeit von gesputtertem Titan nicht mit unterhalb der Beschichtung angebrachten kapazitiven Berührungssensoren kompatibel. Aus der EP 3208545 A1 ist ein Abdeckmittel für ein Kochgerät, umfassend ein Glas- oder Glaskeramiksubstrat und eine Beschichtung, bekannt, bei dem das Verhältnis von größtem zu kleinstem spektralen Lichttransmissionsgrad im sichtbaren Spektralbereich einen Wert von höchstens 4,0 aufweist. Durch die verwendeten Materialien weist das Abdeckmittel einen grauen, blauen oder roten Farbton und einen elektrischen Widerstand von mindestens 3 kΩ/□ auf.

Aus der EP20 2011 110029 U1 und der DE 10 2009 013127 A1 sind weitere Abdeckplatten bekannt.

Eine Aufgabe der Erfindung ist es, eine Abdeckplatte für Einrichtungsoder Ausstattungsgegenstände für Küchen oder Labore bereitzustellen, der die im Stand der Technik vorhandenen Nachteile überwindet oder zumindest verbessert.

Diese Aufgabe wird durch die im unabhängigen Anspruch 1 definierte Abdeckplatte gelöst.

Eine solche Abdeckplatte für einen Einrichtungs- oder Ausstattungsgegenstand für eine Küche oder ein Labor, umfasset ein Glas- oder Glaskeramiksubstrat und eine Beschichtung auf einer Seite des Glas- oder Glaskeramiksubstrats, wobei das Glas- oder Glaskeramiksubstrat und die Beschichtung zusammen einen Lichttransmissionsgrad von 1 % bis 70 %, also von mindestens 1 % und von höchstens 70 % aufweisen. Die Beschichtung weist einen Farbort im CIELAB-Farbraum mit den Koordinaten L* von 20 bis 65, a* von -6 bis 6 und b* von -6 bis 6 auf. Dieser Farbort wird gemessen in Remission mit Licht der Normlichtart D65 vor einem schwarzen Hintergrund in Durchsicht durch das Glasoder Glaskeramiksubstrat. Weiterhin ist die Abdeckplatte dadurch gekennzeichnet, dass der Farbort von Licht der Normlichtart D65 nach Durchtritt durch das Glas- oder Glaskeramiksubstrat und die Beschichtung innerhalb eines Weißbereichs W1 liegt, der im Chromatizitätsdiagramm CIExyY-2° durch die folgenden Koordinaten bestimmt ist:

| Weißbereich W1 | |
|---|---|
| x | y |
| 0,27 | 0,21 |
| 0,22 | 0,25 |
| 0,32 | 0,37 |
| 0,45 | 0,45 |
| 0,47 | 0,34 |
| 0,36 | 0,29 |

Unter einem Einrichtungs- oder Ausstattungsgegenstand für eine Küche oder ein Labor ist im Sinne der vorliegenden Erfindung allgemein ein Küchen- oder Labormöbel oder ein vorzugsweise elektrische betriebenes Küchen- oder Laborgerät zu verstehen, unabhängig von der konkreten Bauform. Zu Küchen- oder Labormöbeln zählen dabei insbesondere Schränke und Tische, die auf Ihrer Oberseite eine Arbeitsplatte aufweisen. Küchengeräte wie Kochgeräte, Kühlschränke, Mikrowellengeräte, Grills, Backöfen, Dampfgarer, Toaster oder Abzugshauben können dabei sowohl für den privaten als auch für den professionellen Bereich ausgelegt sein. Ebenso kann der Gegenstand ein separat angeordnetes Bedienfeld sein, über das ein Benutzer ein oder mehrere damit ansteuerbare Geräte bedienen kann. Erfindungsgemäße Geräte können beispielsweise in Küchen- oder Labormöbel integrierbar sein oder frei im Raum stehen. Zu den Laborgeräten zählen unter anderem auch Öfen, Klimaschränke, Kühlschränke oder Heizplatten.

Prinzipiell ist die Erfindung nicht auf eine bestimmte Sorte Glas- oder Glaskeramik beschränkt, solange die oben genannten Anforderungen an die optischen Eigenschaften erfüllt werden. Für jegliche Form von Einrichtungs- und Ausstattungsgegenständen für Küchen und Labore ist die Temperaturwechselbeständigkeit allerdings ein besonders wichtiger Parameter. Insbesondere für Teile von Geräten bei deren Verwendung hohe Temperaturen entstehen wie Kochfelder, Heizplatten, Öfen, Backöfen mit Pyroloysefunktion, Mikrowellen oder Grills gelten hierfür besonders hohe Anforderungen. Aber auch praktisch alle anderen Bereich eine Küche oder eines Labors ist es vorteilhaft, wenn die verwendeten Materialien temperaturstabil sind, da immer die Gefahr besteht, dass sie mit heißen oder sehr kalten Gegenständen oder Flüssigkeiten in Kontakt kommen. Bei einem solchen Kontakt verändert sich die Temperatur in einem lokal begrenzten Bereich sehr schnell, was zu Spannungen im Werkstoff führt, die insbesondere bei sprödbrüchigen Werkstoffen wie Glas und Glaskeramik schnell zur Zerstörung führen können.

Am effektivsten kann eine sehr gute thermische Temperaturbeständigkeit erreicht werden, indem das Glas- oder Glaskeramiksubstrat einen linearen thermischen Ausdehnungskoeffizienten CTE, gemäß ISO 7991, von höchstens $\pm 2,5 \times 10^{-6}$/K, vorzugsweise höchstens $\pm 1,5 \times 10^{-6}$/K im Temperaturbereich zwischen 20 °C und 300 °C, bevorzugt zwischen 20 °C und 700 °C, aufweist. Unter einem CTE von höchstens $\pm 2,5 \times 10^{-6}$/K ist dabei ein CTE mindestens $-2,5 \times 10^{-6}$/K und höchstens $+2,5 \times 10^{-6}$/K zu verstehen. Insbesondere bei Glaskeramiken kann der CTE in diesem Temperaturbereich auch negative Werte annehmen. Bei einem derart niedrigen thermischen Ausdehnungskoeffizienten führen auch große Temperaturgradient nicht zum Aufbau von Spannungen im Substrat. Dieser Wert wird beispielsweise von Quarzglas oder von Lithium-Aluminium-Silikat-Glaskeramiken (LAS-Glaskeramiken), z.B. der Marke CERAN® der Firma SCHOTT AG erreicht.

Je höher der Betrag des CTE des Glases oder der Glaskeramik ist und je größer die bei Verwendung möglicherweise auftretenden Temperaturgradienten sein können, desto höher ist das Risiko von spannungsinduzierten Brüchen. Dem kann entgegengewirkt werden, in dem das Glas oder die Glaskeramik thermisch oder chemisch vorgespannt wird. Durch eine solche Vorspannung entsteht an der Oberfläche des Glases eine Druckspannung, die der thermischen Spannung entgegenwirkt.

Das thermische Vorspannen ist dabei aus wirtschaftlichen Gründen besonders zu bevorzugen. Es kann allerdings aus technischen Gründen nur bei Gläsern mit einer Dicke von mindestens 2 mm und einem CTE ab $3,5 \times 10^{-6}$/K durchgeführt werden. Zusätzlich darf für das thermische Vorspannen die Glasübergangstemperatur $T_g$ der Gläser, gemessen nach ISO 7884-8 bzw. DIN 52324, einen Wert von ca. 650 °C, vor allem bei Gläsern mit einem CTE zwischen 3,5 und $6 \times 10^{-6}$/K, nicht überschreiten, damit beim Vorspannen mit handelsüblichen Vorspannöfen ausreichend hohe Vorspannungswerte von mehr als ca. 10 MPa erzielt werden können.

Gläser mit einem CTE zwischen 20 und 300 °C von mehr als $6 \times 10^{-6}$/K werden generell, also auch vorgespannt, nicht für den Einsatz in Küchen und Laboren bevorzugt. Das Glas oder Glaskeramiksubstrat weist also bevorzugt für den erfindungsgemäßen Gegenstand einen CTE zwischen 20 und 300°C von höchstens $6 \times 10^{-6}$/K auf. Gläser mit höherem CTE, wie z.B. Kalk-Natron-Glass mit einem CTE von ca. $9 \times 10^{-6}$/K, können zwar im Allgemeinen gut thermisch vorgespannt werden. Die erzielbaren Vorspannungswerte sind aber dennoch nicht ausreichend, um die bei hoher thermischer Belastung durch die große thermische Ausdehnung entstehenden Spannungen kompensieren zu können.

Sowohl für thermisch, als auch für chemisch vorgespannte Glassubstrate ist zu beachten, dass die Vorspannung durch eine Belastung mit hohen Temperaturen über längere Zeiten abgebaut wird. Dieser Abbau läuft schneller ab, je niedriger der $T_g$ des Glases ist. Deshalb weisen vorgespannte Gläser für die Verwendung in Küchen und Laboren vorzugsweise einen $T_g$ von mindestens 500 °C, bevorzugt mindestens 550 °C, auf. Besonders bevorzugt kommen also Glaskeramiken mit einem CTE zwischen 20 und 300 °C von weniger als $1,5 \times 10^{-6}$/K oder Gläser mit einem CTE zwischen 20 und 300 °C von 3,5 bis $6 \times 10^{-6}$/K und einem $T_g$ von 500 bis 650 °C, insbesondere von 550 bis 650 °C, zum Einsatz.

Von ebenso großer Bedeutung wie die thermische Beständigkeit ist die chemische Beständigkeit des Glas- oder Glaskeramiksubstrats gegenüber Säuren und Laugen. In Laboren ist dies wegen des Umgangs mit Chemikalien allgemein vorteilhaft, in Küchen ist insbesondere die Resistenz gegenüber Reinigungsmittel und Lebensmittelbestand- teilen wichtig. Insbesondere Gläser mit hohen Anteilen von mehr als 10 Gewichtsprozent auf Oxidbasis an Alkali- oder Erdalkalimetallen, wie beispielsweise Kalk-Natron-Glas, werden deshalb nicht für den Einsatz in Küchen und Laboren bevorzugt.

Das Glas- oder Glaskeramiksubstrat kann zusätzlich auch eingefärbt sein, solange das Abdeckmittel zumindest die Anforderungen bezüglich Lichttransmissionsgrad, Farbort in Remission und Farbwirkung in Transmission erfüllt.

Unter einem eingefärbten Material, gleich welcher Art, wird dabei jedes Material verstanden, dass aufgrund seiner Zusammensetzung transmittiertes Licht derart absorbiert, dass es einen Lichttransmissionsgrad von höchstens 80 % aufweist. Eingefärbte Materialien enthalten also in ihrer Zusammensetzung färbende beziehungsweise absorbierende Bestandteile. Dabei kann es sich beispielsweise um Farbstoffe, Pigmente oder andere färbende chemische Verbindungen handeln. Im Unterschied dazu, werden Materialien nicht als eingefärbt verstanden, die als solche einen Lichttransmissionsgrad von mehr als 80 % aufweisen, aber auf ihrer Oberfläche eine farbgebende, beispielsweise eine eingefärbte, Beschichtung aufweisen.

Der Lichttransmissionsgrad wird im Wellenlängenbereich 380 nm bis 780 nm unter Verwendung von Licht der Normlichtart D65 gemäß DIN EN 410 bestimmt.

Die Beschichtung der erfindungsgemäßen Abdeckplatte dient zur Einstellung des Lichttransmissionsgrades und des Farborts der Abdeckplatte in Remission und hat Einfluss auf die Farbwirkung für transmittiertes Licht.

Das Glas- oder Glaskeramiksubstrat und die Beschichtung weisen zusammen einen Lichttransmissionsgrad von 1 % bis 70 % auf. Der Lichttransmissionsgrad beträgt also mindestens 1 % und höchstens 70 %. Der Lichttransmissionsgrad wird vorzugsweise passend zu den zum Einsatz kommenden Leuchtelemente gewählt. Beispielsweise ist für Anzeigeelemente ein Lichttransmissionsgrad im Bereich von wenigstens 5 % und von höchstens 70 % bevorzugt. Bevorzugt weist die Abdeckplatte für die Verwendung von Anzeigeelementen einen Lichttransmissionsgrad von wenigstens 9 %, besonders bevorzugt wenigstens 15 %, ganz besonders bevorzugt wenigstens 20 % und von höchstens 55 %, besonders bevorzugt höchstens 45 % und ganz besonders bevorzugt höchstens 40 % auf. Der Lichttransmissionsgrad, kann also beispielsweise in einem der folgenden Bereiche liegen: 5-70 %, 5-55 %, 5-45 %, 5-40 %, 9-70 %, 9-55 %, 9-45 %, 9-40 %, 15-70 %, 15-55 %, 15-45 %, 15-40 %, 20-70 %, 20-55 %, 20-45 % oder 20-40 %.

Je nach Helligkeit der Umgebung sollte die Leuchtdichte eines Anzeigeelements im Außenbereich des Gegenstandes, in das es eingebaut ist, ca. zwischen 100 und 200 cd/m$^2$ liegen, um eine gute Wahrnehmbarkeit zu gewährleisten. Bei einem Lichttransmissionsgrad der Abdeckplatte von 5% ist beispielsweise ein Anzeigeelement mit einer Leuchtdichte von 2000 cd/m$^2$ nötig, um im Außenbereich eine Leuchtdichte von 100 cd/m$^2$ zu erzeugen. Bei einem Lichttransmissionsgrad von 70 % reicht bereits eine Anzeigeeinrichtung mit einer Leuchtdichte von ca. 140 cd/m$^2$ aus, um im Außen- bereich ca. 100 cd/m$^2$ zu erzielen.

Ein höherer Lichttransmissionsgrad des Trennelementes im Bereich des Anzeigeelements wirkt sich dabei positiv auf die Energieeffizienz des Systems aus, da ein Anzeigeelement mit niedrigerer Leuchtdichte und somit weniger Energieverbrauch betrieben werden kann. Davon abgesehen sind Anzeigeelemente mit niedrigerer maximaler Leuchtdichte auch in der Anschaffung kostengünstiger.

Bei Verwendung hellerer Leuchtelemente kann auch ein niedrigerer Lichttransmissionsgrad von Substrat und Beschichtung vorteilhaft sein. Insbesondere bei Verwendung heller LED-Leuchtmittel oder vergleichbar heller Leuchtmittel kann ein Transmissionsgrad im Bereich 1 bis 5 %, vorzugsweise 1 bis 3 %, insbesondere 1 bis 2 % vorteilhaft sein.

Die Beschichtung weist einen Farbort im CIELAB-Farbraum mit den Koordinaten L* von 20 bis 65, a* von -6 bis 6 und b* von -6 bis 6, gemessen in Remission mit Licht der Normlichtart D65 gegen Schwarzfalle in Durchsicht durch das Glas- oder Glaskeramiksubstrat, auf. In einer bevorzugten Ausführungsform weist die Beschichtung einen Farbort mit den Koordinaten 22 ≤ L* ≤ 35, bevorzugt 25 ≤ L* ≤ 30, besonders bevorzugt 26 ≤ L* ≤ 28, mit -4 ≤ a* ≤ 4, bevorzugt -2 ≤ a* ≤ 2 und mit -4 ≤ b* ≤ 4, bevorzugt -2 ≤ b* ≤ 2 auf. Dieser Farbort wird von Beobachtern allgemein als schwarz oder zumindest als dunkel wahrgenommen, was aus ästhetischen Gründen für Einrichtungs- und Ausstattungsgegenstände bevorzugt wird.

In einer anderen bevorzugten Ausführungsform weist die Beschichtung einen Farbort mit den Koordinaten 45 ≤ L* ≤ 65, bevorzugt 50 ≤ L* ≤ 60, besonders bevorzugt 54 ≤ L* ≤ 59, mit -4 ≤ a* ≤ 4, bevorzugt -2 ≤ a* ≤ 2 und mit -4 ≤ b* ≤ 4, bevorzugt -2 ≤ b* ≤ 2 auf. Dieser Farbort wird von Beobachtern allgemein als grau wahrgenommen, was aus ästhetischen Gründen insbesondere für Einrichtungs- und Ausstattungsgegenstände bevorzugt wird, die Elemente aus Edelstahl aufweisen.

Farborte mit einem Betrag von |a*| größer als 6 und/oder einem Betrag von |b*| größer als 6 werden unabhängig von dem dazugehörigen L*-Wert deutlich als farbig empfunden, was für Einrichtungs- und Ausstattungsgegenstände unerwünscht ist.

Beschichtungen mit einem L*-Wert von weniger als 65 und insbesondere von weniger als 35 haben gegenüber Beschichtungen mit höherem L*-Wert zusätzlich den Vorteil, dass sie im Vergleich insgesamt weniger Licht reflektieren. Dadurch können unterhalb oder hinter der Abdeckplatte montierte Leuchtelemente wie LEDs oder Anzeigen von einem Beobachter im Außenbereich besser wahrgenommen werden, da der Kontrast, also das Verhältnis zwischen transmittierter Helligkeit des Leuchtelements und reflektierter Helligkeit des Umgebungslichts, größer ist. Dies ist insbesondere in typischen Einbausituation von Einrichtungs- und Ausstattungsgegenständen mit einer hellen Umgebungsbeleuchtung, wie es beispielsweise bei Arbeitsbeleuchtungen in Küchen und Laboren üblicherweise der Fall ist, von Vorteil. Hierdurch kann auch der Bedienkomfort und die Bediensicherheit eines solchen Gegenstandes verbessert werden. Dies ist insbesondere im Vergleich zu gesputterten metallischen Schichten, beispielsweise aus Titan oder Silizium, die üblicherweise einen L*-Wert von mehr als 70 aufweisen, vorteilhaft.

Alternativ kann bei gleichem Kontrast wie bei einer Beschichtung mit hellerem Farbort ein Leuchtelement gewählt werden, dass weniger Licht emittiert, was zu günstigeren Produktionskosten und einer verbesserten Energieeffizienz des Systems beiträgt.

Diese Farbkoordinaten werden gemessen, indem die Abdeckplatte so auf eine Schwarzfalle, gelegt wird, dass die Beschichtung auf der Seite der Schwarzfalle angeordnet ist und das Substrat auf der Seite des Messgerätes. Dann wird mit einem handelsüblichen Farbmessgerät, beispielsweise dem Spektralphotometer CM-700d der Firma Konica Minolta, unter Verwendung der Normlichtart D65, einem 10° Standard-Beobachter der Farbort in Remission gemessen. Als Schwarzfalle kann beispielsweise die Schwarz-Glaskachel CM-A511 von Konica Minolta verwendet werden. Die Bezeichnung Messung gegen eine Schwarzfalle bedeutet in diesem Sinne, dass die zu messende Probe zwischen dem Messgerät und einer Schwarzfalle angeordnet ist.

Weiterhin ist die erfindungsgemäße Abdeckplatte dadurch gekennzeichnet, dass der Farbort von Licht der Normlichtart D65 nach Durchtritt durch das Glas- oder Glaskeramiksubstrat und die Beschichtung innerhalb eines Weißbereichs W1 liegt, der im Chromatizitätsdiagramm CIExyY-2° durch die folgenden Koordinaten bestimmt ist:

| Weißbereich W1 | |
|---|---|
| x | y |
| 0,27 | 0,21 |
| 0,22 | 0,25 |
| 0,32 | 0,37 |
| 0,45 | 0,45 |
| 0,47 | 0,34 |
| 0,36 | 0,29 |

Der Weißbereich W1 ergibt sich dabei als ein Bereich entlang der Schwarzkörperkurve im CIExyY-Farbraum, der von ca. 2.750 K bis ca. 1.000.000 K Farbtemperatur reicht und an der oberen Grenze um einen Wert von ca. y = 0,04 gegenüber der Schwarzkörperkurve nach oben und an der unteren Grenze um ca. y = 0,07 nach unten verschoben ist. Hieraus ergibt sich der folgende Effekt: Licht der Normlichtart D65 hat per Definition eine Farbtemperatur von ca. 6.500 K und bei direkter Betrachtung mit einem 2° Beobachter einen Farbort von x = 0,31 und y = 0,33. Mit der vorliegenden Erfindung kann also bei Durchtritt von Licht durch die Abdeckplatte der Farbort des Lichtes im Wesentlichen entlang der Schwarzkörperkurve, sowohl zu höheren als auch zu niedrigeren Farbtemperaturen verschoben werden, ohne einen unerwünschten Farbstich zu erzeugen. Weißes Licht wird also nach dem Durchtritt immer noch als weißes Licht wahrgenommen.

Der Farbort von Licht nach Durchtritt durch Substrat und Beschichtung kann mittels eines geeigneten Farbmessgeräts, beispielsweise dem Farbmessgerät CS-150 von Konica Minolta, gemessen werden.

Anzeigeeinrichtungen wie Displays sind beispielsweise üblicherweise so eingestellt, dass sie weißes Licht mit einer Farbtemperatur von 5.000 K, 6.500 K oder 9.300 K emittieren. Der erfindungsgemäße Gegenstand ermöglicht es also, mit handelsüblichen Displays ohne weitere notwendige Anpassungen einen für Displays gewünschten Farbort des vom Display emittierten Lichts im Außenbereich des Gegenstandes zu erzeugen.

Eine solche Verschiebung kann nicht erreicht werden, wenn die Beschichtung im Bereich von durchtretendem Licht Aussparungen bzw. Öffnungen aufweist. Deshalb weist die Beschichtung in einer bevorzugten Ausführungsform in Bereichen, in denen im in den Einrichtungs- oder Ausstattungsgegenstand eingebauten Zustand Licht durch die Abdeckplatte hindurchtreten soll, keine Öffnung auf. Dies ist auch deshalb vorteilhaft, da solche Öffnungen, insbesondere, wenn sie eine ähnliche Größe, Anzahl und Position wie Pixel von unter bzw. hinter der Abdeckplatte angeordneten Displays aufweisen, zu einer Reduzierung der darstellbaren Bildqualität führen, da Moire-Effekte auftreten und/oder das angezeigte Bild, Symbol oder Zeichen durch eine Vielzahl an Öffnungen hindurch betrachtet verpixelt erscheint.

Öffnungen sind im Bereich von durchtretendem Licht auch unabhängig von ihrer Größe unerwünscht, da größere als die oben genannten Öffnungen in der Beschichtung dazu führen, dass unter bzw. hinter der Abdeckplatte angeordnete Bauteile für einen Benutzer im Außenbereich deutlich sichtbar werden, was nachteilig ist.

In einer bevorzugten Ausführungsform ist das Trennelement dadurch gekennzeichnet, dass der Farbort von Licht der Normlichtart D65 nach Durchtritt durch das Glas- oder Glaskeramiksubstrat und die Beschichtung innerhalb eines Weißbereichs W2 liegt, der im Chromatizitätsdiagramm CIExyY-2° durch die folgenden Koordinaten bestimmt ist:

| Weißbereich W2 | |
| --- | --- |
| x | y |
| 0,25 | 0,27 |
| 0,32 | 0,36 |
| 0,41 | 0,42 |
| 0,42 | 0,36 |
| 0,35 | 0,31 |
| 0,27 | 0,24 |

Der Weißbereich W2 ergibt sich dabei als ein Bereich entlang der Schwarzkörperkurve im CIExyY-Farbraum, der von ca. 3.500 K bis ca. 20.000 K Farbtemperatur reicht und an der oberen Grenze um einen Wert von ca. y = 0,025 gegenüber der Schwarzkörperkurve nach oben und an der unteren Grenze um ca. y = 0,04 nach unten verschoben ist. Dieser Bereich erstreckt sich im Vergleich zu W1 also entlang eines kürzeren Abschnitts der Schwarzkörperkurve und weist eine geringere Abweichung in den x- und y-Koordinaten von der Schwarzkörperkurve auf. Weißes Licht, dass durch eine solche Abdeckplatte hindurchtritt, wird deswegen im Außenbereich des erfindungsgemäßen Gegenstandes als besonders weiß und somit unbunt wahrgenommen.

In einer besonders bevorzugten Ausführungsform ist das Trennelement dadurch gekennzeichnet, dass der Farbort von Licht der Normlichtart D65 nach Durchtritt durch das Glas- oder Glaskeramiksubstrat und die Beschichtung innerhalb eines Weißbereichs W3 liegt, der im Chromatizitätsdiagramm CIExyY-2° durch die folgenden Koordinaten bestimmt ist:

| Weißbereich W3 | |
| --- | --- |
| x | y |
| 0,3 | 0,33 |
| 0,35 | 0,38 |
| 0,41 | 0,42 |
| 0,42 | 0,36 |
| 0,38 | 0,34 |
| 0,33 | 0,3 |

Der Weißbereich W3 ergibt sich dabei als ein Bereich entlang der Schwarzkörperkurve im CIExyY-Farbraum. Dieser Bereich reicht von ca. 3.500 K bis ca. 6.500 K Farbtemperatur. Er entspricht an der oberen Grenze und der unteren Grenze dem Weißbereich W2. Unterschiede kommen dabei lediglich durch die Rundung der Koordinaten auf zwei Nachkommastellen zustande. Dieser Bereich erstreckt sich im Vergleich zu W2 also entlang eines kürzeren Abschnitts der Schwarzkörperkurve. Farborte im Weißbereich W3 werden als besonders Neutralweiß wahrgenommen.

Dies gelingt mit der vorliegenden Erfindung überraschender Weise auch ohne die Verwendung eines Schwarzkörperkompensationsfilters zum Ausgleich des Transmissionsverlaufs der Beschichtung und des Substrats. Unter einem Schwarzkörperkompensationsfilter wird dabei im Sinne der vorliegenden Erfindung ein optischer Filter verstanden, dessen Transmissionsspektrum so auf das Transmissionsspektrum von Substrat und Beschichtung abgestimmt ist, dass Licht der Normlichtart D65 nach Durchtritt durch den Schwarzkörperkompensationsfilter, das Substrat und die Beschichtung einen Farbort mit Koordinaten innerhalb des Weißbereichs W1, W2 oder gegebenenfalls W3 aufweist.

Erfindungsgemäß ist ein solcher Filter nicht notwendig, da Licht der Normlichtart D65 nach Durchtritt durch das Trennelement bereits einen Farbort in diesem Bereich aufweist. Ein solcher Filter kann optional dennoch zwischen dem Substrat und einem Anzeigeelement angeordnet sein, beispielsweise, wenn verschiedene Bereiche des Trennelements für transmittiertes Licht der Normlichtart D65 unterschiedliche Farborte, beispielsweise innerhalb eines der Bereiche W1, W2 oder W3 erzeugen sollen.

Schwarzkörperkompensationsfilter können beispielsweise in Form aufgedruckter, aufgetragener, angedrückter oder entsprechend angeordneter Schichten, Folien oder Platten vorliegen. Auch andere Farbkompensationsfilter sind denkbar, beispielsweise, um im Innenbereich des Gegenstandes emittiertes weißes Licht für einen Beobachter im Außenbereich farbig, beispielsweise blau, rot, grün oder mit einer beliebigen anderen Farbe, erscheinen zu lassen.

In einer bevorzugten Ausführungsform weisen die beschichteten Glasoder Glaskeramiksubstrate eine Transmission bei einer Wellenlänge von 630 nm von wenigstens 2 %, bevorzugt wenigstens 4 % und besonders bevorzugt von wenigstens 10 % auf.

In einer weiteren bevorzugten Ausführungsform beträgt die Transmission bei einer Wellenlänge von 470 nm wenigstens 1 %, vorzugsweise wenigstens 2 %.

In einer bevorzugte Ausführungsform der Erfindung umfasst eine Abdeckplatte, welche eine beschichtetes Glas- oder Glaskeramiksubstrat umfasst, mindestens eine unter bzw. hinter der Beschichtung des Substrats angeordnete Streu- oder Diffusorschicht, vorzugsweise mit mindestens einer Abdeckschicht zwischen Substratbeschichtung und Streu- oder Diffusorschicht sowie mit mindestens einer Aussparung in der Abdeckschicht und vorzugsweise mindestens einem unterseitig angebrachten Leuchtmittel.

Streu- und Diffusorschichten können optional auch eingefärbt ausgeführt sein. Eingefärbte Streu- und Diffusorschichten können gleichzeitig als Diffusor und als optischer Filter fungieren.

Solche Streu- oder Diffusorschichten können beispielsweise 1 bis 15 $\mu$m dick sein. Sie können nicht-eingefärbte Streupartikel, beispielsweise aus $TiO_2$, $SiO_2$, $Al_2O_3$, $ZrO_2$ oder anderen Metalloxiden enthalten. Die mittlere Größe solcher Partikel kann kleiner als 1 $\mu$m sein. Vorzugsweise weisen die Streu- oder Diffusorschichten eine hohe Homogenität der erzeugten Leuchtdichte, eine niedrige Körnigkeit und eine hohe Helligkeit auf. Hierdurch kommt es zu einer für den Benutzer sehr angenehmen Wahrnehmung eines sehr homogen ausgeleuchteten Bereichs.

In einer bevorzugten Ausführungsform weist das Glas- oder Glaskeramiksubstrat zusammen mit der Beschichtung eine hohe Transmission im infraroten Spektralbereich auf. Dies ermöglicht die Positionierung von infrarotdetektierenden Sensoren im Innenbereich des erfindungsgemäßen Gegenstandes oder die Verwendung von Strahlungsheizelementen wie Infrarotstrahlern. Je nach Sensor oder Heizelement ist dabei die Transmission in einem speziellen Spektralbereich vorteilhaft.

Die angegebenen Transmissionswerte beziehen sich auf die Gesamttransmission der Probe, gemessen unter Verwendung einer Ulbrichtkugel. Für diese Messung wird die Probe zwischen einer geeigneten Lichtquelle und einer Ulbrichtkugel am Eingang der Ulbrichtkugel positioniert, so dass die Beschichtung auf der Seite der Ulbrichtkugel angeordnet ist. An einen seitlich, unter einem Winkel von 90° zum Strahlengang angeordneten Ausgang der Ulbrichtkugel ist ein geeigneter Sensor zur Detektion des transmittierten Lichtanteils angebracht. Durch diese Messanordnung wird sowohl der direkt transmittierte Anteil als auch der streuend transmittierte Anteil des Lichts detektiert.

Für siliziumbasierte Infrarot-Sensoren, wie sie beispielsweise in sogenannten Time-of-flight Sensoren für berührungslose Eingabegeräte für die Gestensteuerung oder Annäherungserkennung, wie dem VL6180X von ST Microelectronics, verwendet werden, ist der Spektralbereich zwischen 850 und 1000 nm besonders relevant. In diesem Bereich weist die Abdeckplatte bevorzugt bei wenigstens einer Wellenlänge eine Transmission von wenigstens 3 %, bevorzugt wenigstens 10 %, besonders bevorzugt wenigstens 30 % auf, um den Einsatz solcher Sensoren zu ermöglichen. Besonders für die Gestensteuerung sind hohe Transmissionen von Vorteil, weil dann Gesten in größerem Abstand von der Außenseite der Abdeckplatte detektiert werden können. Andere Anwendungen für siliziumbasierte Infrarot-Sensoren sind beispielsweise Empfänger für die Signale von Fernbedienungen oder Kommunikationsschnittstellen für die optische Datenübertragung. InGaAs-basierte Infrarot-Detektoren sind insbesondere im Bereich zwischen 1 und 2 $\mu$m empfindlich. Für den Einsatz solcher Detektoren ist die Abdeckplatte geeignet, wenn sie im Bereich der Aussparung bei wenigstens einer Wellenlänge, bevorzugt bei einer Wellenlänge von 1500 nm, eine Transmission von wenigstens 30 %, vorzugsweise wenigstens 45 %, besonders bevorzugt wenigstens 60 % aufweist.

Das Emissionsmaximum eines Strahlungsheizelementes ergibt sich aus dem Wienschen Verschiebungsgesetz und liegt für Temperaturen zwischen 100 °C und 1000 °C zwischen 7,8 $\mu$m und 2,3 $\mu$m. Aus Gründen der Energieeffizienz und um ein übermäßiges Aufheizen der Abdeckplatte durch ein Strahlungsheizelement zu verhindern, weist die Abdeckplatte im Bereich zwischen 3,25 $\mu$m und 4,25 $\mu$m bei wenigstens einer Wellenlänge eine Transmission von wenigstens 10 %, bevorzugt wenigstens 20 %, besonders bevorzugt wenigstens 30 % auf. In diesem spektralen Bereich kann auch mit im Innenraum des Gegenstandes angeordneten Bolometern oder Thermosäulen die Temperatur eines heißen Objektes im Außenbereich, beispielsweise einem heißen Koch- oder Laborgefäß, gemessen werden, wenn die Transmission der Abdeckplatte die genannten Mindestanforderungen erfüllt.

In einer bevorzugten Ausführungsform liegt die Dicke des Glas- oder Glaskeramiksubstrats zwischen 2 mm und 12 mm, bevorzugt zwischen 3 und 8 mm, besonders bevorzugt zwischen 3 und 6 mm. Die Dicke des Substrates wird dabei im Wesentlichen von den Anforderungen an die mechanische Beständigkeit und das Gewicht limitiert. Gläser, die dünner als 2 mm sind, können aus technischen Gründen in der Praxis nicht thermisch vorgespannt werden, da die hierfür erforderlichen Kühlraten nicht mit wirtschaftlich vertretbarem Aufwand erreicht werden können. Weiterhin muss beachtet werden, dass die Dicke des Substrates Auswirkung auf seine optischen Eigenschaften haben kann. Die Dicke ist in jedem Fall so zu wählen, dass die genannten Grenzwerte der Transmission eingehalten werden.

Optional kann das Substrat auch eine oder mehrere Aussparungen aufweisen. Solche Aussparungen können beispielsweise zur Aufnahme von Down-Draft-Dunstabzügen oder Durchführungen von Rohrleitungen vorgesehen sein.

Ebenfalls optional kann das Substrat eine Kantenbearbeitung aufweisen, beispielsweise eine Facette oder einen C-Schliff.

Weiterhin kann das Substrat auf einer oder beiden Seiten bestimmte Oberflächeneigenschaften aufweisen. Es kann beispielsweise poliert oder aufgeraut sein. Dadurch lassen sich beispielsweise gezielt die optischen Eigenschaften, insbesondere die optische Streuung des Substrats, anpassen. Ebenso kann durch Polieren oder Aufrauen die Haftung der Beschichtung auf der Oberfläche des Substrats verbessert werden. Alternativ oder zusätzlich kann das Substrat auch Beschichtungen zur Anpassung der Oberflächeneigenschaften aufweisen. Zu solchen Beschichtungen zählen beispielsweise Anti-Reflex-Beschichtungen, Anti-Glare-Beschichtungen sowie hydrophobe oder hydrophile Beschichtungen.

In einer weiteren bevorzugten Ausführungsform weist die Beschichtung einen Flächenwiderstand von wenigstens 1 kΩ/□, bevorzugt wenigstens 0,5 MΩ/□, besonders bevorzugt wenigstens 2 MΩ/□ bei einer Prüfspannung von 1000 V gemessen mit einer Vierpunktmessung auf. Ein derart hoher Flächenwiderstand ermöglicht es insbesondere kapazitive Berührungssensoren unterhalb bzw. hinter der Abdeckplatte anzuordnen, deren Verwendung bei einer höheren Leitfähigkeit der Beschichtung aufgrund parasitärer Kapazitäten nicht oder nur mit erheblich reduzierter Empfindlichkeit möglich wäre. Auch der Einsatz von Induktionsspulen unterhalb bzw. hinter der Abdeckplatte wird hierdurch ermöglicht, da das von solchen Spulen erzeugte Wechselmagnetfeld bei einem entsprechend hohen elektrischen Widerstand der Beschichtung nicht durch die Beschichtung gedämpft oder gestreut wird. Eine Streuung von Magnetwechselfeldern findet beispielsweise bei Schichten mit einem Widerstand von weniger als 1 kΩ/□ und einer Schichtdicke, die geringer als die Eindringtiefe des Magnetfeldes ist, statt und führt zu einer schlechten elektromagnetischen Verträglichkeit des Gesamtsystems. Induktionsspulen können beispielsweise als Heizelemente oder zur kabellosen Energieübertragung vorgesehen sein.

In einer weiteren bevorzugten Ausführungsform weist die Beschichtung eine Schichtdicke von wenigstens 50 nm, bevorzugt wenigstens 100 nm, besonders bevorzugt wenigstens 200 nm und höchstens 2 $\mu$m, bevorzugt wenigstens 1 $\mu$m und besonders bevorzugt höchstens 500 nm auf. Es hat sich gezeigt, dass Schichtdicken von weniger als 50 nm auf Substraten in Größen, wie sie für Abdeckplatten für ein Einrichtungs- oder Ausstattungsgegenstände nur mit sehr hohem Aufwand über die gesamte Fläche mit ausreichender Dickenhomogenität herstellen lassen. Schichtdicken von weniger als 50 nm führen deshalb unter Produktionsbedingungen zu einem unwirtschaftlich hohen Produktionsausschuss. Auch Schichtdicken von mehr als 2 $\mu$m sind wirtschaftlich nachteilig, da sie im Vergleich zu dünneren Schichten mit einem erhöhten Materialaufwand und je nach Verfahren auch mit einer längeren Produktionsdauer einhergehen. Bei einem festgelegten Materialsystem kann die Schichtdicke zur Einstellung der optischen Eigenschaften der Beschichtung entsprechend angepasst werden.

In einer weiteren bevorzugten Ausführungsform weist die Beschichtung einen gemittelten spektralen Reflexionsgrad R($\lambda$) im Wellenlängenbereich von 380 bis 780 nm von höchstens 10 %, bevorzugt höchstens 8 % auf. Besonders bevorzugt weist die Beschichtung einen maximalen spektralen Reflexionsgrad im Wellenlängenbereich von 380 bis 780 nm von höchstens 10 %, bevorzugt höchstens 8 % auf. Es hat sich gezeigt, dass Abdeckplatten, die eine Beschichtung mit einem über das sichtbare Licht gemittelten spektralen Reflexionsgrad von mehr als 10% aufweisen, im eingebauten Zustand Umgebungslicht so stark reflektieren, dass selbst bei geringer Helligkeit des Umgebungslichts der schwarze Eindruck der Beschichtung gestört wird.

Darüber hinaus hat sich ein niedriger Reflexionsgrad auch dann als vorteilhaft erwiesen, wenn unter bzw. hinter der Abdeckplatte ein Leuchtelement, insbesondere ein Anzeigeelement wie ein Display angeordnet ist. Bei einem gemittelten Reflexionsgrad von mehr als 10% kann abhängig vom Umgebungslicht die Sichtbarkeit solcher Anzeigen im eingeschalteten Zustand stark reduziert sein. Dies ist insbesondere der Fall, wenn Leuchtelemente mit geringer Helligkeit und/oder Schichten mit niedrigem Lichttransmissionsgrad eingesetzt werden.

In einer weiteren bevorzugten Ausführungsform weist das Verhältnis von höchstem spektralen Reflexionsgrad zu niedrigstem spektralen Reflexionsgrad der Beschichtung im Wellenlängenbereich von 380 bis 780 nm einen Wert von höchstens 5, bevorzugt höchstens 3 und besonders bevorzugt höchstens 2 auf. Im Idealfall beträgt das Verhältnis 1 oder zumindest einen Wert zwischen 1 und 1,5 oder sogar zwischen 1 und 1,2. Es hat sich gezeigt, dass ein derart flacher Verlauf einer Beschichtung eine nochmals verbesserte Schwarzwirkung erzielt. Insbesondere bei einem relativ hohen mittleren Reflexionsgrad in der Nähe von 10 % führt ein Verhältnis von mehr als 5 dazu, dass spiegelnde Reflexionen von Umgebungslicht im eingebauten Zustand störend farbig wahrgenommen werden können, auch wenn der gemessene Farbort der Beschichtung in den oben genannten Grenzen liegt.

Der spektrale Reflexionsgrad R($\lambda$) kann beispielsweise mittels eines Lambda 850 UV/VIS Spektrophotometers der Firma PerkinElmer gemessen werden, indem die Probe so im Messgerät angeordnet wird, dass die Messung nicht durch das Substrat hindurch erfolgt. Die Beschichtung ist also für die Messung auf der dem Messsensor zugewandten Seite des Substrats angeordnet.

In einer weiteren bevorzugten Ausführungsform weisen das Glas- oder Glaskeramiksubstrat und die Beschichtung zusammen einen Haze von weniger als 5 %, bevorzugt weniger als 2%, besonders bevorzugt weniger als 1% auf. Unter dem Haze ist dabei gemäß der Norm ASTM D1003, der Anteil des durch eine Probe transmittierten Lichts zu verstehen, der durch Streuung um einen Winkel von mehr als 2,5 ° gegenüber der optischen Achse des auf die Probe eingestrahlten Lichts der Lichtart CIE-C abgelenkt wird. Der Haze kann beispielsweise mit dem Messgerät hazegard der Firma BYK gemäß der Norm ASTM D1003 gemessen werden. Bei einem Haze von höchstens 5 % tritt also nur eine geringe Weitwinkelstreuung von transmittiertem Licht auf. Dies ist besonders dann vorteilhaft, wenn unter oder hinter der Abdeckplatte eine Anzeigeeinrichtung wie ein Display oder ein Projektor angeordnet ist, da sich ein Haze von mehr als 5 % nachteilig auf die Bildqualität, insbesondere die Bildschärfe, auswirkt.

Auf der Seite der Abdeckplatte, die dem Innenraum des Gegenstandes zugewandt ist, kann zusätzlich ein Mittel zur Reduzierung der Gesamttransmission angeordnet sein. Ein solches Mittel ist auf der dem Innenraum zugewandten Seite angeordnet, damit es vor äußeren Einflüssen, insbesondere Beschädigungen durch mechanische Belastungen, geschützt ist. Bei einem solchen Mittel kann es sich um eine Beschichtung auf dem Glas- oder Glaskeramiksubstrat, eine Folie, ein selbsttragendes Trägermaterial wie beispielsweise eine Scheibe oder Folie aus Glas, Kunststoff oder Isolationsmaterialien, die Schichtsilikate (Glimmer) wie Mica oder Faserstoffe enthalten, handeln.

Ein solches Mittel zur Reduzierung der Gesamttransmission kommt vorzugsweise vor allem dann zum Einsatz, wenn der Lichttransmissionsgrad von Substrat und Beschichtung zusammen 2 % übersteigt. Dadurch kann eine ausreichende Blickdichtheit der Abdeckplatte sichergestellt werden. Es ist dabei vorteilhaft, den Lichttransmissionsgrad eines solchen Mittels an den der Abdeckplatte anzupassen. Je höher der Lichttransmissionsgrad der Abdeckplatte ist, desto niedriger wird vorteilhafterweise der Lichttransmissionsgrad des Mittels zur Reduzierung der Gesamttransmission gewählt. Es ist vorteilhaft, wenn der Gesamttransmissionsgrad von Substrat, Beschichtung und Mittel zur Reduzierung der Gesamttransmission 6%, insbesondere 4 % und ganz besonders 2 % nicht überschreitet.

Wenn vorgesehen ist, dass unter bzw. hinter der Abdeckplatte ein Leuchtelement angeordnet ist, so weist das Mittel zur Reduzierung der Gesamttransmission in dem Bereich, in dem das emittierte Licht durch die Abdeckplatte hindurchtreten soll vorzugsweise wenigstens eine Aussparung auf.

Beschichtungen, die die vorgenannten Anforderungen erfüllen, enthalten bevorzugt Spinelle oder Cermets. Weiterhin können sie Carbide oder Carbonitride enthalten. Bevorzugt bestehen sie aus einem dieser Materialien. Diese Beschichtungen können mittels Sputtern hergestellt werden.

Spinelle sind aus der Mineralogie und von keramischen Vollkörpern bekannt. Die Erfinder haben herausgefunden, dass oxidische Spinelle überraschenderweise als Legierung von einem metallischen Target reaktiv gesputtert unter unterstöchiometrischer Zugabe von Sauerstoff, abhängig von der Menge an zugegebenem Sauerstoff, einen sehr niedrigen L*-Wert von weniger als 35 oder auch einen hohen L*-Wert von 50 - 65 aufweisen können. Dadurch lassen sich prinzipiell dunkle Farbtöne oder auch graue, hell reflektierende Farbtöne bei gleichzeitig niedriger elektrischer Leitfähigkeit herstellen. Die grauen Farbtöne können dabei Farbkoordinaten im Bereich 50 < L* < 65, -5 < a* < 5 und -5 < b* < 5 aufweisen. Weiterhin können sie einen flachen Verlauf des spektralen Reflexionsgrads aufweisen. Das Verhältnis von größtem zu kleinstem Reflexionsgrad im sichtbaren Spektralbereich kann weniger als 1,5 betragen. Dabei kann die mittlere Reflexion bei ca. 33 % liegen. Auch der Transmissionsverlauf solcher Schichten kann flach verlaufen, sodass Licht der Normlichtart D65 nach Durchtritt durch eine solche Beschichtung innerhalb des Weißbereichs W1 liegt.

Im Wellenlängenbereich von 780 bis ca. 4.500 nm können Beschichtungen aus Spinellen hohe spektrale Transmissionsgrade von über 30 % oder sogar über 50 %, bis hin zu mehr als 80 % aufweisen. Im Wesentlichen ist der spektrale Transmissionsgrad im infraroten Spektralbereich bei Abdeckplatten mit Spinell-Beschichtungen nicht durch die Beschichtung, sondern durch das verwendete Substrat limitiert. Nicht eingefärbte, transparente LAS-Glaskeramiken, beispielsweise der Marke CERAN CLEARTRANS® der SCHOTT AG, mit einer Spinellbeschichtung, können bei einer Wellenlänge von ca. 3.750 nm einen spektralen Transmissionsgrad von über 40 % aufweisen. Solche Beschichtungen sind also insbesondere für die Verwendung von Strahlungsheizelementen oder Infrarotsensoren hinter oder unter der Abdeckplatte geeignet. Die Flächenwiderstände liegen bei 1,8 bzw. 3.160 M$\Omega$/$\square$ bei einer Prüfspannung von 1000V.

Geeignete Spinelle weisen eine Zusammensetzung gemäß der Formel $A_xC_uB_yD_vE_zF_w$ auf, wobei A und C ausgewählt sind aus der Gruppe bestehend aus Cr2+; Mn2+, Fe2+, Co2+, Ni2+, Cu2+, Zn2+; Al3+, Sn2+/4+, Ti4+, Zr4+, oder der Lanthanide und Mischungen davon. B und D sind ausgewählt aus der Gruppe bestehend aus Mn3+, Fe3+, Co3+, Ni3+, Cu3+, Al3+, Ga3+, Sn4+, Sc3+, Ti4+, Zn2+, oder der Lanthanide und Mischungen davon. E und F sind bevorzugt ausgewählt aus der Gruppe bestehend aus den divalenten Anionen von S, Se und O und Mischungen davon. Die Werte von x, u, y, v, z und w erfüllen die folgenden Formeln:

$$0{,}125 < (x+u) / (y+v) \leq 0{,}55$$

und

$$z+w = 4.$$

Bevorzugt weist die Beschichtung Kristallite auf, wobei zumindest 95 Gew.-% der Kristallite symmetrische, kubische Kristallstrukturen vom Spinell-Typ zeigen.

Um die Farbneutralität zu verbessern ist es möglich über eine zwischen dem Substrat und der Spinellbeschichtung angeordneten Ausgleichsschicht das Schichtsystem zu verändern. Der L*-Wert wird dadurch nahezu nicht beeinflusst. Ausgleichsschichten können Materialien sein, welche ihre Brechzahlen zwischen Substrat und Spinellbeschichtung im sichtbaren Spektrum aufweisen, z.B. CeO2, HfO2, Y2O3, Si3N4, AIN, $SiO_2$,Al2O3, AlTiOx, TiSiOx, SiOxNy, AlSiOxNy. Auch unterstöchiometrische Varianten können als Ausgleichsschicht verwendet werden. Die Schichtdicke solche Ausgleichsschichten liegt bevorzugt im Bereich 25 bis 500 nm, besonders bevorzug 35 bis 250 nm. Überraschender Weise ändert eine solche Ausgleichsschicht nur den Farbort der Beschichtung in Remission, nicht jedoch die Transmissionscharakteristik. Eine solche Ausgleichsschicht wirkt also nicht als Schwarzkörperkompensationsfilter.

In einer bevorzugten Ausführungsform besteht die Beschichtung aus einem Spinell aus einem der folgenden Materialsysteme: Aluminiumspinelle, Chromspinelle, Eisenspinelle, Titanspinelle, Kobaltspinelle. Besonders bevorzugt besteht die Beschichtung aus CoFeMnCr-Spinell und weist optional eine Ausgleichsschicht aus SiOxNy auf.

In einer weiteren bevorzugten Ausführungsform besteht die Beschichtung aus einem Cermet mit einer oxidischen Matrix aus $SiO_2$,$Al_2O_3$, $ZrO_2$, $TiO_2$ oder Mischoxiden davon und einer metallischen Komponente aus Ti, Si, Al, Mo, Zr, Cu, Nb, Co, Cr, W, Ta, Ni, B oder einer Legierung aus wenigstens zwei dieser Metalle. Unter der Bezeichnung Cermets werden im Sinne der vorliegenden Erfindung Verbundwerkstoffe aus einer oxidischen Matrix mit einer darin dispergierten metallischen Komponente verstanden. Ausführungsformen, die solche Verbundwerkstoffe enthalten, werden hier besonders bevorzugt, da sie die optischen Eigenschaften der metallischen Komponente mit der niedrigen elektrischen Leitfähigkeit des Matrixmaterials verbinden und dadurch für die Beschichtung einer erfindungsgemäßen Abdeckplatte besonders gut geeignet sind.

Diese Cermet-Schichtsysteme können sich dadurch auszeichnen, dass sie einen sehr hohen Flächenwiderstand, > 20 M$\Omega$/$\square$, bei einstellbarem Lichttransmissionsgrad von 1 - 70% aufweisen. In diesen Transmissionsbereichen konnten sehr farbneutrale Schichten mit niedrigem L*- Wert hergestellt werden. Typische Werte hierfür lagen beispielsweise bei L=27 bei 35% Lichttransmissionsgrad. Cermet-Schichtsysteme zeigten insbesondere bei hohen Transmissionsgraden von >20% Farborte mit a*- und b*-Werten in einem Bereich von +/- 2, im Einzelfall auch deutlich darunter. Der mittlere spektrale Reflexionsgrad von Cermet-Beschichtungen mit einem Lichttransmissionsgrad von 35 % lag bei 5 % mit einem Verhältnis von größtem zu kleinstem Wert im sichtbaren Spektralbereich von ca. 1,5. Der Transmissionsverlauf solcher Schichten hat sich als sehr flach erwiesen, so dass Licht der Normlichtart D65 nach Durchtritt durch die Beschichtung im Weißbereich W1 oder sogar im Weißbereich W2 lag. Im infraroten Spektralbereich zwischen 780 und 4250 nm weisen diese Cermet-Schichtsysteme nur eine schwache Absorption auf, sodass auch hier der spektrale Transmissionsgrad durch das Substrat und nicht durch die Beschichtung limitiert wird. Die untersuchten Cermet-Schichten wiesen bei einer Wellenlänge von ca. 3750 nm einen Transmissionsgrad von mehr als 40 % auf.

In einer bevorzugten Ausführungsform werden oxidische Matrix und metallische Komponente so aufeinander abgestimmt, dass sie eine erhöhte thermische Stabilität aufweisen. Die thermische Stabilität kann beispielsweise durch Messung des CIELAB-Farbortes nach einer Belastung der Probe bei 380 °C für 80 Stunden und einem Vergleich der Messwerte mit der unbelasteten Probe erfolgen. Besonders vorteilhaft ist dabei eine Materialpaarung von sauerstoffaffinem Metall zur Bildung der Metalloxidmatrix und einem weniger sauerstoffaffinen Metall für die Bildung der metallischen Komponente im Cermet. Besonders bevorzugt werden $SiO_2$ oder $Al_2O_3$ als die Metalloxidmatrix in Kombination mit Mo als die metallische Komponente. Si bzw. Al haben eine höhere Sauerstoffaffinität als Mo, wodurch die Bildung von $SiO_2$ bzw. $Al_2O_3$ gegenüber Mo-Oxid bevorzugt ist. Gleichzeitig wirkt bei sehr dichten Schichten die oxidische Matrix als Oxidationsbarriere und schützt das Mo vor Oxidation. Auch Mischoxide, insbesondere aus $SiO_2$ und $Al_2O_3$, sind für die Verwendung als Metalloxidmatrix geeignet.

In einer bevorzugten Ausführungsform wird $SiO_2$ für die oxidische Matrix verwendet. Dann kann das Verhältnis von Mo zu Si in der Beschichtung mindestens 5:95, bevorzugt mindestens 10:90, besonders bevorzugt 15:85 und insbesondere 20:80 in Gew.-% betragen. Dabei kann es vorzugsweise höchstens 50:50, bevorzugt höchstens 45:55, besonders bevorzugt höchstens 40:60 und insbesondere höchstens 35:65 in Gew.-% betragen.

Das Verhältnis von Mo zu Si in der Beschichtung kann also beispielsweise in einem der Bereich 5:95 bis 50:50 Gew.-%, 10:90 bis 45:55 Gew.-%, 15:85 bis 40:60 Gew.-% oder sogar 20:80 bis 35:65 Gew.-% liegen. Zur Bestimmung dieser Verhältnisse werden die Gewichtsanteile von Mo und Si in der Beschichtung verwendet. Der Gewichtsanteil von Sauerstoff oder anderen Bestandteilen der Beschichtung wird dabei nicht berücksichtigt. Der Fachmann wird den Anteil an Sauerstoff so einstellen, dass die Beschichtung den jeweiligen Anforderungen genügt.-

In einer besonders bevorzugten Ausführungsform enthält die Beschichtung außer Mo, Si, Sauerstoff und unvermeidbaren Verunreinigungen keine weiteren Bestandteile.

Die Verwendung solcher $MoSiO_x$-Cermets hat sich als besonders vorteilhaft herausgestellt, da diese einen besonders flachen Transmissionsverlauf und einen besonders flachen Verlauf des spektralen Reflexionsgrades aufweisen und gleichzeitig einen hohen elektrischen Widerstand und eine hohe thermische Beständigkeit.

Zur thermischen Stabilisierung können Cermets, wie auch Spinelle, zusätzlich mit einer Oxidationsbarriere versehen werden. Dies können z.B. sein: Oxide oder Nitride oder Oxinitride aus zumindest einem der folgenden Materialien Si, Al, Ti, Zr, Sn, Cr, Zn, Nb, Y, Ta, Mo, B. Für Cermets hat sich insbesondere Siliziumnitrid als bevorzugte Oxidationsbarriere erwiesen, für Spinelle insbesondere Siliziumoxid. Oxidationsbarriereschichten können sich auch positiv auf die Transmission im Infraroten auswirken.

Die Erfinder haben herausgefunden, dass es überraschenderweise möglich ist, mit Beschichtungen aus Carbiden und Carbonitriden auf Glas oder Glaskeramik niedrige L*-Werte im Bereich von 30 bei einem Farbort von -3 < a* < 3, -3 < b* < 3 in Remission herzustellen. Darüber hinaus weisen die Schichten einen mittleren Reflexionsgrad von ca. 4 % bis 8% und ein Verhältnis von maximalem zu minimalen Reflexionsgrad im sichtbaren Spektralbereich von ca. 1,5 auf. Im infraroten Spektralbereich transmittieren diese Schichten bereits bei 950 nm mehr als 50% und weisen im Bereich ca. 1.250 bis mindestens 4.000 nm keine nennenswerte Absorption auf, so dass in diesem Bereich die spektrale Transmission einer Abdeckplatte durch das Substrat limitiert wird.

Diese Schichtsysteme können als Einzelschichten oder als Schichtsystem mit den schon für Spinelle beschriebenen Ausgleichsschichten zwischen Substrat und Beschichtung und/ oder mit zusätzlicher Oxidationsbarrieren hergestellt werden. Der Fachmann wird dabei aus den oben beschriebenen Materialien eine Kombination mit passendem Brechungsindex, der zwischen dem des Substrats und dem der Beschichtung liegt, und einer passenden Schichtdicke auswählen. Bei der Verwendung von Schichten auf Basis von Carbiden oder Carbonitriden ist vorzugsweise zumindest eines der folgenden Materialien in der Beschichtung enthalten: Si, Zr, W, Ti, Mo, Cr, B, DLC.

Alle genannten Schichtsysteme werden vorzugsweise mittels Magnetronsputtern, insbesondere mittels reaktiven Mittelfrequenzsputtern oder Hochfrequenzsputtern hergestellt. Beim reaktiven Mittelfrequenzsputtern können metallische Targets, beispielsweise aus reinen Metallen oder aus Legierungen, zum Einsatz kommen und als reaktive Prozessgase beispielsweise Sauerstoff oder Stickstoff zugeführt werden. Als nichtreaktives Prozessgas wird Argon verwendet.

Spinellbeschichtungen können beispielsweise mittels reaktivem Mittelfrequenzsputtern hergestellt werden, indem ein Target aus einer Legierung der Metallkationen, insbesondere ein Target aus einer CoFeMnCr-Legierung, verwendet wird und Sauerstoff als Reaktivgas verwendet wird. Über die Menge des zugegebenen Sauerstoffs lässt sich dabei die Stöchiometrie der Beschichtung variieren und insbesondere auch unterstöchiometrisch, also mit Sauerstoffmangel, einstellen.

Besonders bevorzugt wird für die Targetlegierung ein Zusammensetzungsbereich in Gew.-% von

| | |
|---|---|
| Co | 15-25, insbesondere 19-21, |
| Fe | 30-40, insbesondere 34-36, |
| Mn | 14-24, insbesondere 18-20 und |
| Cr | 21-31, insbesondere 25-27 verwendet |

Das molare Verhältnis der Zusammensetzung des Targets entspricht auch den molaren Anteilen von Co, Fe, Mn und Cr in der Beschichtung.

Cermets können beispielsweise ebenfalls mittels reaktivem Mittelfrequenzsputtern hergestellt werden. Wenn das Metall, dass die Oxidmatrix bildet, gegenüber dem Metall, dass die metallische Komponente bildet, eine ausreichend höhere Sauerstoffaffinität aufweist, kann beim Sputtern ein Legierungstarget verwendet werden. Ein solches Legierungstarget besteht vorzugsweise bis auf unvermeidbare Verunreinigungen aus diesen Metallen. Unter unvermeidbaren Verunreinigungen werden solche Verunreinigungen verstanden, die entweder aus technischen oder aus wirtschaftlichen Gründen nicht vermieden werden können.

Insbesondere, kann ein Legierungstarget aus Mo und Si verwendet werden. Ein solches Legierungstarget enthält vorzugsweise wenigstens 5, bevorzugt wenigstens 10, besonders bevorzugt wenigstens 15, insbesondere wenigstens 20 oder sogar wenigstens 25 Gew.-% Mo. Ein solches Legierungstarget enthält vorzugsweise höchstens 50, bevorzugt höchstens 45, besonders bevorzugt höchstens 40, insbesondere höchstens 35 Gew.-% Mo. Die Zusammensetzung liegt also beispielsweise in einem der Bereiche 5 bis 50 Gew.-% Mo und 95 bis 50 Gew.-% Si, 10 bis 50 Gew.-% Mo und 50 bis 90 Gew.-% Si, 20 bis 40 Gew.-% Mo und 60 bis 80 Gew.-% Si, oder 25 bis 35 Gew.-% Mo und 65 bis 75 Gew.-% Si. Das molare Verhältnis der Zusammensetzung des Targets entspricht auch den molaren Anteilen von Mo und Si in der Beschichtung. Vorzugsweise enthält das Target bis auf Mo, Si und unvermeidbare Verunreinigungen keine weiteren Bestandteile.

Der Sauerstoff wird als Reaktivgas beim Sputtern zugegeben. Da der Sauerstoff aufgrund der unterschiedlichen Affinitäten bevorzugt mit dem Si reagiert, bildet sich die Cermet-Struktur aus $SiO_2$-Matrix mit Mo als metallischer Komponente.

Alternativ ist es möglich, zwei getrennte metallische Targets, beispielsweise eines aus Aluminium und eines aus Cu oder eines aus Si und eines aus Mo, zu verwenden und diese so anzuordnen, dass ein Co-Sputtern, also ein gleichzeitiges Abscheiden der beiden Materialien auf einem Substrat, möglich ist. Das Reaktivgas wird dann vorzugsweise nur im Bereich des Targets zur Bildung der Metalloxidmatrix, also beispielsweise dem Aluminium-Target, zugeführt. Dies hat gegenüber der Verwendung eines Legierungstargets den Vorteil, dass die Zusammensetzung der Beschichtung einfacher variiert werden kann.

Carbide und Carbonitride können beispielsweise mittels Hochfrequenzsputtern unter Verwendung keramischer Targets hergestellt werden. Hierbei können die Targets bereits die gewünschte Zusammensetzung der Schicht aufweisen, also beispielsweise SiC oder TiCN.

Bevorzugt besteht ein keramisches Target aus 5 bis 60 Gew.-% C und 40 bis 95 Gew.-% Si, bevorzugt aus 20 bis 55 Gew.-% C und 45 bis 80 Gew.% Si, insbesondere aus 40 bis 50 Gew.-% C und 50 bis 60 Gew.-% Si. Das molare Verhältnis der Zusammensetzung des Targets entspricht auch den molaren Anteilen von C und Si in der Beschichtung.

Alternativ ist die Verwendung eines metallischen Targets, beispielsweise Si oder Ti, in Kombination mit einem Kohlenstoff-Target, beispielsweise einem Graphit-Target mittels Co-Sputtern möglich. Auf diese Weise kann die Stöchiometrie der Beschichtung variiert werden, indem die Sputterraten der jeweiligen Targets über die Sputterleistung entsprechend gewählt werden. Weiterhin kann bei einem solchen Sputterprozess Stickstoff als Reaktivgas zur Herstellung von Carbonitriden zugeführt werden.

In Tabelle 1 sind beispielhaft erfindungsgemäße Beschichtungen der Materialtypen Spinell und Cermet, sowie Vergleichsbeispiele eines Spinells dargestellt. Alle Schichten wurden mittels reaktivem Mittelfrequenzsputtern hergestellt. Für die Spinell- und Cermet-Schichten wurden metallische Legierungstargets verwendet und Sauerstoff bzw. Stickstoff als Reaktivgas zugeführt.

Als Materialien wurden dabei CoFeMnCr für die Spinellschichten und MoSiOx für die Cermetschichten verwendet. Für die Beispiele 3 bis 10 ist in Tabelle 1 das relative Verhältnis des Anteils von Molybdän (Mo) und Silizium (Si) in den Beschichtungen in Gew.-% angegeben. Der Sauerstoffanteil der Beschichtungen ist in diesem Wert nicht berücksichtigt.

Als Substrat wurde für alle Schichten eine 4 mm dicke, nicht eingefärbte, transparente LAS-Glaskeramik des Typs CERAN CLEARTRANS® der Firma SCHOTT AG verwendet.

Für alle Beispiele ist der CIELAB-Farbort in Remission, der Lichttransmissionsgrad LT, der Haze und der Flächenwiderstand angegeben. Alle Messungen wurden wie oben beschrieben durchgeführt. Für alle Beispiele wurden zusätzlich die Farbkoordinaten x und y im CIExyY-Farbsystem für transmittiertes Normlicht der Lichtart D65, wie oben beschrieben, bestimmt. Weiterhin sind für diese Proben die spektralen Lichttransmissionsgrade bei 470 nm, 630 nm, 950 nm, 1.600 nm und 3.750 nm angegeben.

Bei dem Vergleichsbeispiel V1 handelt es sich um eine dunkle SpinellBeschichtung ohne Ausgleichsschicht, die nicht die Anforderungen bezüglich des Farborts in Remission entspricht. Durch den hohen negativen b*-Wert wirkt diese Beschichtung blau.

Alle Beispiele bis auf Beispiel 3 sind farbneutrale schwarze Beschichtungen mit einem Farbort im Bereich 26 < L* < 37, -3 < a* < 3, -3 < b* < 3.

Die Probe 3 ist eine farbneutrale graue Beschichtungen mit einem Farbort im Bereich 55 < L* < 58, -2 < a* < 2 und -5 < b* < 5.

Tabelle 1: Beispiele erfindungsgemäßer Beschichtungen und Vergleichsbeispiel.

| Nr. | V1 | 1 | 2 |
|---|---|---|---|
| Typ | Spinell | Spinell + Ausgleichsschicht | Spinell |
| Material | CoFeMnCr | CoFeMnCr + SiOxNy | CoFeMnCr |
| Farbe | Blau | Schwarz | Grau |
| Farbort | | | |
| L* | 29,79 | 30,48 | 57,62 |
| a* | 1,86 | -0,75 | -1,9 |
| b* | -17,95 | 0,57 | 4,61 |
| x | 0,39 | 0,387 | 0,34 |
| y | 0,39 | 0,378 | 0,35 |
| Transmission | | | |
| LT [%] | 37,6 | 33,2 | 38,1 |
| 950 nm [%] | 59,4 | 67,1 | 52,8 |
| 1600 nm [%] | 63,3 | 63,2 | 66,1 |
| 3750 nm [%] | 43,6 | 43,5 | 44,4 |
| Haze [%] | 0,11 | 0,28 | 0,35 |
| Sonstiges | | | |
| R [MΩ/□] | >20 | >20 | 1,87 |
| Dicke [nm] | | 200 + 45 | |

Fortsetzung Tabelle 1

| Nr. | 3 | 4 | 5 | 6 |
|---|---|---|---|---|
| Typ | Cermet | Cermet | Cermet | Cermet |
| Material | MoSiOx | MoSiOx | MoSiOx | MoSiOx |
| Mo | 32 | 43 | 14 | 22 |
| Si | 68 | 57 | 86 | 78 |
| Farbe | Schwarz | Schwarz | Schwarz | Schwarz |
| Farbort | | | | |
| L* | 27,1 | 29,0 | 27,4 | 27,2 |
| a* | 0,4 | -0,1 | 0,3 | -0,8 |
| b* | 1,2 | 0,8 | 0,1 | 1,4 |
| x | 0,368 | 0,43 | 0,45 | 0,37 |
| y | 0,374 | 0,40 | 0,41 | 0,37 |
| Transmission | | | | |
| LT [%] | 32,8 | 2,6 | 2,9 | 29,5 |
| 470 nm [%] | | 1,1 | 1,0 | 20,2 |
| 630 nm [%] | | 4,4 | 5,2 | 38,4 |
| 950 nm [%] | 65,3 | 13,8 | 20,1 | 59,8 |
| 1600 nm [%] | 83,4 | 40,5 | 51,4 | 80,2 |
| 3750 nm [%] | 47,3 | 40,2 | 40,9 | 47 |
| Haze [%] | 0,22 | 0,3 | 0,3 | 0,2 |
| Sonstiges | | | | |
| R [MΩ/□] | >20 | >20 | >20 | >20 |
| Dicke [nm] | | | | |

## Fortsetzung Tabelle 1

| Nr. | 7 | 8 | 9 | 10 |
|---|---|---|---|---|
| Typ | Cermet | Cermet | Cermet | Cermet |
| Material | MoSiOx | MoSiOx | MoSiOx | MoSiOx |
| Mo | 32 | 32 | 32 | 32 |
| Si | 68 | 68 | 68 | 68 |
| Farbe | Schwarz | Schwarz | Schwarz | Schwarz |
| Farbort | | | | |
| L* | 26,9 | 26,4 | 27,1 | 27,8 |
| a* | 0,6 | 2,0 | 1,0 | -2,8 |
| b* | 1 | -1,8 | -2,4 | 1,2 |
| x | 0,37 | 0,38 | 0,37 | 0,37 |
| y | 0,37 | 0,39 | 0,38 | 0,38 |
| Transmission | | | | |
| LT [%] | 32,0 | 35,5 | 36,7 | 34,4 |
| 470 nm [%] | 21,8 | 22,7 | 23,7 | 24,1 |
| 630 nm [%] | 41,3 | 45,8 | 45,8 | 44,2 |
| 950 nm [%] | 65,1 | 54,9 | 65,1 | 66,1 |
| 1600 nm [%] | 82,2 | 79,9 | 81,3 | 80,4 |
| 3750 nm [%] | 46,9 | 47,8 | 47,8 | 47,5 |
| Haze [%] | 0,2 | 0,3 | 0,3 | 0,3 |
| Sonstiges | | | | |
| R [M$\Omega$/□] | >20 | >20 | >20 | >20 |
| Dicke [nm] | | | | |

Für alle Beispiele weist Licht der Normlichtart D65 nach Durchtritt durch die Beschichtung und das Substrat einen Farbort im Weißbereich W1 auf. Mit Ausnahme der Beispiele 4 und 5 liegen alle Beispiele auch in den Weißbereichen W2 und W3.

Alle Proben weisen einen Haze von höchstens 1 % auf und sind somit für eine Verwendung in Kombination mit Anzeigeelementen wie TFT-Displays oder Projektoren geeignet.

Alle Beispiele weisen einen Flächenwiderstand von deutlich mehr als 1 kΩ/□ auf und sind somit sowohl für die Verwendung mit Induktionsspulen als auch mit kapazitiven Berührungssensoren geeignet.

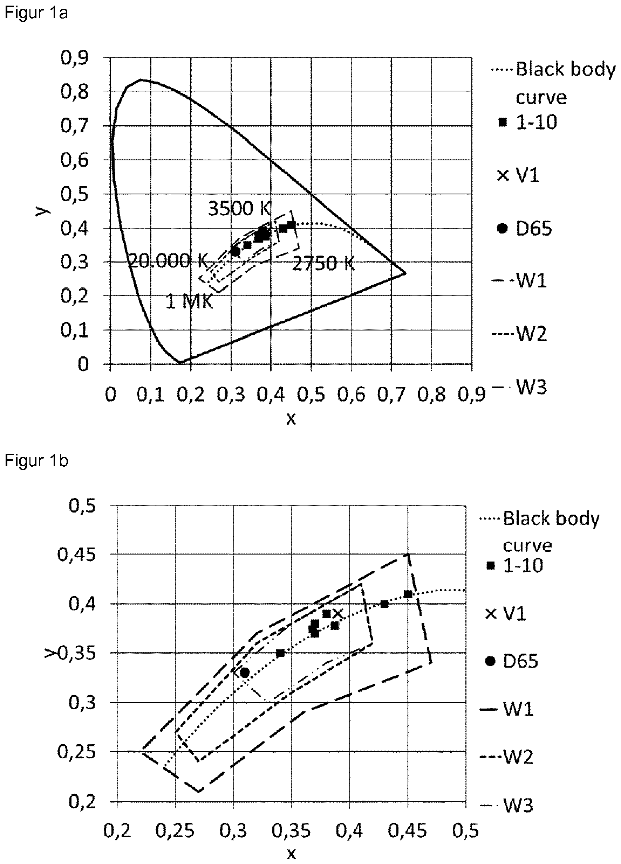

Die Figur 1a zeigt ein Chromatizitätsdiagramm des Farbraums CIExyY mit 2° Normalbeobachter (CIExyY-2°).

In Figur 1a sind folgende Elemente dargestellt:

- die Schwarzkörperkurve ("black body curve") als gepunktete Linie,
- die beiden Weißbereiche W1 und W2 als gestrichelte Linien,
- der Weißbereich W3 als gestrichelte Linie mit Punkten,
- die Farbkoordinaten von Licht der Normlichtart D65 als Punkt,
- die Farbkoordinaten von Licht der Normlichtart D65 nach Durchtritt durch die Ausführungsbeispiele 1-10 als Quadrate und
- die Farbkoordinaten von Licht der Normlichtart D65 nach Durchtritt durch Vergleichsbeispiel V1 als x.

In Figur 1b ist ein vergrößerter Ausschnitt der Figur 1a dargestellt.

Jeder Punkt auf der Schwarzkörperkurve entspricht dem Farbort des von einem Schwarzkörperstrahler emittierten Lichts bei einer definierten Temperatur, der sogenannten Farbtemperatur. Dieser Kurve kommt für die Wahrnehmung des Menschen eine besondere Rolle zu, da die Sonne ebenfalls einem Schwarzkörperstrahler entspricht und somit die Farbe von Sonnenlicht auf der Schwarzkörperkurve liegt. Je nach Stand der Sonne verschiebt sich der Farbort zwischen kühleren und wärmeren Farborten, dabei entspricht eine Farbtemperatur von 20.000 K einem klaren Himmel und eine Temperatur von 3.500 K einer Abendsonne kurz vor Beginn der Dämmerung. Farborte auf oder in der Nähe der Schwarzkörperkurve werden deshalb als Weiß und besonders natürlich wahrgenommen.

Alle Beispiele liegen im Weißbereich W1 entlang der Schwarzkörperkurve verteilt. Beispiel 5 erzeugt dabei eine besonders warme Farbtemperatur bei etwas unter 3.000 K. Dies entspricht ungefähr einer Glühlampe mit einer Leistung von 200 W.

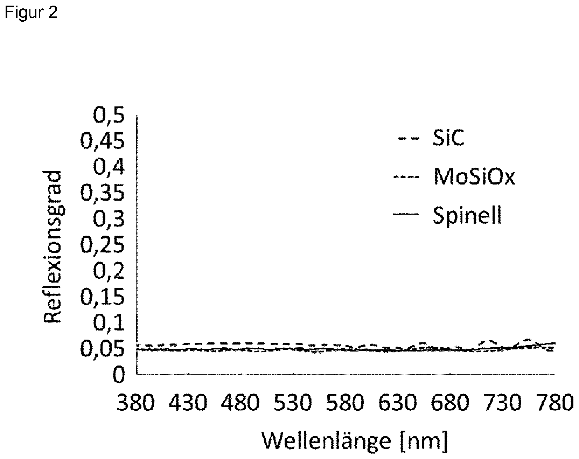

In Figur 2 ist der spektrale Reflexionsgrad der Beispiele 1 ("Spinell", durchgezogene Linie), 5 ("MoSiOx", fein gestrichelte Linie), sowie einer erfindungsgemäßen SiC-Beschichtung ("SiC", grob gestrichelte Linie) im gesamten sichtbaren Spektralbereich von 380 bis 780 nm dargestellt.

Alle drei dargestellten Beispiele weisen im gesamten sichtbaren Spektralbereich sehr niedrige spektrale reflexionsgrade von weniger als 10 %, im Mittel von ca. 5 % auf. Darüber hinaus verlaufen die Kurven sehr flach und weisen nur minimale Unterschiede zwischen dem maximalen und dem minimalen Reflexionsgrad auf.

Bei derart niedrigen Reflexionsgraden kann Licht, dass durch ein solche Abdeckplatte hindurchtritt auf der anderen Seite auch bei sehr hellem Umgebungslicht sehr gut wahrgenommen werden.

Da die Kurven sehr flach Verlaufen wird der Farbort von reflektiertem Licht nicht verschoben und die Abdeckplatte wirkt besonders farbneutral.

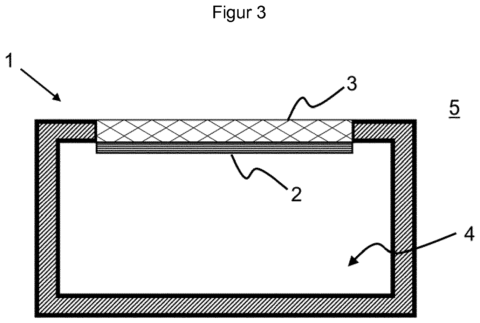

Fig. 3 enthält eine schematische Darstellung einer Ausführungsform eines Einrichtungs- oder Ausstattungsgegenstandes (1) mit einer erfindungsgemäßen Abdeckplatte (3) im Querschnitt. Die Abdeckplatte (3) trennt dabei abschnittsweise den Innenbereich (4) des Gegenstandes (1) vom Außenbereich (5) ab. Die Abdeckplatte besteht in der Darstellung aus einem Glas- oder Glaskeramiksubstrat mit der Beschichtung (2) auf dem Substrat. Zusammen weisen Substrat und Beschichtung (2) einen Lichttransmissionsgrad von 1 % bis 70 % auf. Der Farbort der Beschichtung (2) im CIELAB-Farbraum liegt im Bereich der Koordinaten L* von 20 bis 65 und a* von -6 bis 6 und b* von -6 bis 6, gemessen in Remission mit Licht der Normlichtart D65 gegen eine Schwarzfalle und in Durchsicht durch das Glas- oder Glaskeramiksubstrat. Der Farbort von Licht der Normlichtart D65 liegt nach Durchtritt durch das Glas- oder Glaskeramiksubstrat und die Beschichtung (2) innerhalb des Weißbereichs W1.

Einrichtungs- oder Ausstattungsgegenstände für Küchen oder Labore mit erfindungsgemäßen Abdeckplatten können in ihrem Innenbereich eine Vielzahl von Bauteilen und Komponenten enthalten.

Die Gegenstände können beispielsweise ein oder mehrere Heizelemente zum Aufheizen eines Gegenstandes, beispielsweise eines Topfes, im Außenbereich oder auch im Innenbereich des Gegenstandes aufweisen. Dies können insbesondere Strahlungsheizelemente, Induktionsheizelemente oder Mikrowellengeneratoren sein.

Die Gegenstände können Anzeigeelemente und Leuchtelemente wie Punkt-, Linien- oder Flächenlichtquellen aufweisen. Dazu zählen beispielsweise LEDs, Lichtfasern und OLEDs. Diese Lichtquellen können mit einer bestimmten Farbe, insbesondere weiß, rot, grün und/oder blau leuchten oder auch mit veränderlichen Farben. Zu den verwendbaren Anzeigeelementen zählen beispielsweise graphische Anzeigen oder Segmentanzeigen. Zu den graphischen Anzeigen zählen beispielsweise TFT-Displays, insbesondere LCD- oder OLED-Displays. Zu den Segmentanzeigen zählen insbesondere 7-Segment-Anzeigen. Insbesondere können auch rot leuchtende TFT-Displays vorgesehen sein.

Zwischen diesen Leuchtelementen und der Abdeckplatte können zusätzliche Farbfilter vorgesehen sein, beispielsweise um eine weiße LED zur Erzeugung einer farbigen Lichterscheinung mit einem definierten Farbort und hoher Farbsättigung nutzen zu können.

Leuchtelemente können insbesondere auch im Heißbereich in der Nähe von Heizelementen angeordnet sein. Hierbei ist insbesondere für die Erzeugung von weißen Leuchterscheinungen im Außenbereich des Gegenstandes von Vorteil, dass keine temperaturempfindlichen Schwarzkörperkompensationsfilter benötigt werden.

Die Gegenstände können Kühlaggregate, beispielsweise Peltierelemente, in thermischem Kontakt mit der Abdeckplatte aufweisen, um an der dem Außenbereich zugewandten Seite der Abdeckplatte eine Kühlfläche, beispielsweise zur Kühlung von Lebensmitteln oder Chemikalien, zu erzeugen.

Der Gegenstand kann diverse Sensoren aufweisen, beispielsweise kapazitive Berührungssensoren zur Steuerung oder Infrarotsensoren zur Gestensteuerung oder zur Messung der Temperatur von heißen Gegenständen im Außenbereich, beispielsweise heißen Töpfen. Solche Sensoren können auf die Unter- bzw. Rückseite des Substrats aufgedruckt, angepresst, gebondet, aufgeklebt oder in sonstiger Weise angeordnet sein. Dies gilt insbesondere für Berührungssensoren.

Weiterhin kann der Gegenstand Mikrophone und Kameras, beispielsweise zur Sprachsteuerung oder Benutzererkennung und -authentifizierung aufweisen. Dies kann beispielsweise in Laboren besonders vorteilhaft sein, falls der Gegenstand nur von entsprechend geschulten Personen verwendet werden darf.

Der Gegenstand kann verschiedene Schnittstellen zur Kommunikation aufweisen, beispielsweise WLAN-, Bluetooth-, oder NFC-Module oder Infrarotschnittstellen. Über solche Schnittstellen kann der Gegenstand beispielsweise entweder mit dem Internet oder mit anderen Gegenständen in seiner Nähe, beispielsweise Töpfen mit entsprechender Schnittstelle oder anderen elektronischen Geräten, verbunden sein. Insbesondere kann es zur Steuerung und Kommunikation mit einem mobilen elektronischen Gerät, wie einem Mobiltelefon oder einem Tablet, verbunden sein.

Der Gegenstand kann eine Vorrichtung zur kabellosen Energieübertragung von Gegenständen im Außenbereich, insbesondere mittels Induktionsspulen und nach dem Qi-Standard, enthalten.

Die Abdeckplatte kann auf der dem Außenbereich zugewandten Seite Beschichtungen aufweisen, beispielsweise Kratzschutz-Schichten, Antireflex-Schichten, Anti-Glare-Schichten, Dekor-Schichten, einfach zu reinigende Schichten oder Infrarot-reflektierende Schichten, solange diese die wesentlichen optischen Eigenschaften der Abdeckplatte nicht verändern.

Die Abdeckplatte kann Aussparungen aufweisen, beispielsweise Ausschnitte für Spülbecken oder Down-Draft-Dunstabzüge oder Durchführungen für Rohrleitungen.

Alle diese Bestandteile können einzeln oder in Kombination vorliegen. Überraschenderweise hat sich gezeigt, dass es mit einer erfindungsgemäßen Abdeckplatte möglich ist, die Vielzahl an anwendungsspezifischen Anforderungen besonders gut zu erfüllen. Die optischen Eigenschaften können so eingestellt werden, dass unter bzw. hinter der Abdeckplatte angebrachte Leuchtmittel deutlich, hell und mit dem gewünschten Farbeindruck zu sehen sind. Gleichzeitig kann aber ein Durchblick durch die Abdeckplatte ausreichend verhindert werden. Dadurch kann ein sogenannter Dead-Front-Effekt besonders gut erzielt werden. Das bedeutet, dass elektronische Bauelemente auch im ausgeschalteten Zustand nicht durch die Abdeckplatte sichtbar sind. Dadurch entsteht insbesondere im ausgeschalteten Zustand eine besonders homogene und ansprechende Anmutung des Abdeckmittels. Trotzdem sind die Abdeckmittel mit einer Vielzahl unterschiedlicher Sensoren kombinierbar. Dazu zählen beispielsweise kapazitive oder induktive Sensoren sowie Infrarotsensoren bei verschiedenen Wellenlängen.

**Patentansprüche**

**1.** Eine Abdeckplatte (3) für einen Einrichtungs- oder Ausstattungsgegenstand (1) für eine Küche oder ein Labor, umfassend ein Glas- oder Glaskeramiksubstrat und eine Beschichtung (2) auf einer Seite des Glas- oder Glaskeramiksubstrats,

> wobei das Glas- oder Glaskeramiksubstrat und die Beschichtung (2) zusammen einen Lichttransmissionsgrad von 1 % bis 70 % aufweisen,
> wobei die Beschichtung (2) einen Farbort im CIELAB-Farbraum mit den Koordinaten L* von 20 bis 65 und a* von -6 bis 6 und b* von -6 bis 6, gemessen in Remission mit Licht der Normlichtart D65 gegen eine Schwarzfalle in Durchsicht durch das Glas- oder Glaskeramiksubstrat, aufweist,
> wobei der Farbort von Licht der Normlichtart D65 nach Durchtritt durch das Glas- oder Glaskeramiksubstrat und die Beschichtung (2) innerhalb eines Weißbereichs W1 liegt, der im Chromatizitätsdiagramm CIExyY-2° durch die folgenden Koordinaten bestimmt ist:

| Weißbereich W1 | |
|---|---|
| x | y |
| 0,27 | 0,21 |
| 0,22 | 0,25 |
| 0,32 | 0,37 |
| 0,45 | 0,45 |
| 0,47 | 0,34 |
| 0,36 | 0,29 |

wobei die Abdeckplatte keinen Schwarzkörperkompensationsfilter umfasst.

2. Abdeckplatte (3) nach einem der vorhergehenden Ansprüche, **dadurch gekennzeichnet, dass** die Beschichtung (2) einen Farbort im CIELAB-Farbraum mit den Koordinaten $22 \leq L^* \leq 35$, bevorzugt $25 \leq L^* \leq 30$, besonders bevorzugt $26 \leq L^* \leq 28$, mit $-4 \leq a^* \leq 4$, bevorzugt $-2 \leq a^* \leq 2$ und mit $-4 \leq b^* \leq 4$, bevorzugt $-2 \leq b^* \leq 2$, gemessen in Remission mit Licht der Normlichtart D65 gegen eine Schwarzfalle in Durchsicht durch das Glas- oder Glaskeramiksubstrat, aufweist.

3. Abdeckplatte (3) nach einem der vorhergehenden Ansprüche, **dadurch gekennzeichnet, dass** die Beschichtung (2) einen Farbort im CIELAB-Farbraum mit den Koordinaten $45 \leq L^* \leq 65$, bevorzugt $50 \leq L^* \leq 60$, besonders bevorzugt $54 \leq L^* \leq 59$, $-4 \leq a^* \leq 4$, bevorzugt $-2 \leq a^* \leq 2$ und mit $-4 \leq b^* \leq 4$, bevorzugt $-2 \leq b^* \leq 2$, gemessen in Remission mit Licht der Normlichtart D65 gegen eine Schwarzfalle in Durchsicht durch das Glasoder Glaskeramiksubstrat, aufweist.

4. Abdeckplatte (3) nach einem der vorhergehenden Ansprüche, **dadurch gekennzeichnet, dass** der Farbort von Licht der Normlichtart D65 nach Durchtritt durch das Glas- oder Glaskeramiksubstrat und die Beschichtung (2) innerhalb eines Weißbereichs W2 liegt, der im Chromatizitätsdiagramm CIExyY-2° durch die folgenden Koordinaten bestimmt ist:

| Weißbereich W2 | |
|---|---|
| x | y |
| 0,25 | 0,27 |
| 0,32 | 0,36 |
| 0,41 | 0,42 |
| 0,42 | 0,36 |
| 0,35 | 0,31 |
| 0,27 | 0,24 |

5. Abdeckplatte (3) nach einem der vorhergehenden Ansprüche, **dadurch gekennzeichnet, dass** das Glas- oder Glaskeramiksubstrat zusammen mit der Beschichtung (2) bei einer Wellenlänge von 1500 nm eine Transmission von wenigstens 30 %, vorzugsweise wenigstens 45 %, besonders bevorzugt wenigstens 70 % aufweist und/oder bei wenigstens einer Wellenlänge im Bereich zwischen 850 nm und 1000 nm eine Transmission von wenigstens 3 %, bevorzugt wenigstens 10 %, besonders bevorzugt wenigstens 30 % und/oder bei wenigstens einer Wellenlänge im Bereich zwischen 3,25 µm und 4,25 µm eine Transmission von wenigstens 10 %, bevorzugt wenigstens 20 %, besonders bevorzugt wenigstens 30 % aufweist.

6. Abdeckplatte (3) nach einem der vorhergehenden Ansprüche, **dadurch gekennzeichnet, dass** das Glas- oder Glaskeramiksubstrat ein Glaskeramiksubstrat mit einem thermischen Ausdehnungskoeffizienten CTE zwischen 20 und 300 °C von weniger als $\pm 2,5 \times 10^{-6}$/K oder ein Glassubstrat mit einem thermischen Ausdehnungskoeffizienten CTE zwischen 20 und 300 °C von 3,5 bis $6 \times 10^{-6}$/K und einer Glasübergangstemperatur $T_g$ von 500 bis 650 °C, insbesondere von 550 bis 650 °C, ist.

7. Abdeckplatte (3) nach einem der vorhergehenden Ansprüche, **dadurch gekennzeichnet, dass** die Beschichtung (2) einen Flächenwiderstand von wenigstens 1 kΩ/□, bevorzugt wenigstens 0,5 MΩ/□, besonders bevorzugt wenigstens 2 MΩ/□ bei einer Prüfspannung von 1000 V aufweist.

8. Abdeckplatte (3) nach einem der vorhergehenden Ansprüche, **dadurch gekennzeichnet, dass** die Beschichtung (2) einen gemittelten spektralen Reflexionsgrad im Wellenlängenbereich von 380 bis 780 nm von höchstens 10 %, bevorzugt höchstens 8 % gemessen in Durchsicht durch das Glas- oder Glaskeramiksubstrat, aufweist.

9. Abdeckplatte (3) nach dem vorhergehenden Anspruch 9, **dadurch gekennzeichnet, dass** das Verhältnis von höchstem spektralen Reflexionsgrad zu niedrigstem spektralen Reflexionsgrad im Wellenlängenbereich von 380 bis 780 nm einen Wert von 1 bis 5, bevorzugt von 1 bis 3 und besonders bevorzugt von 1 bis 2 aufweist.

10. Abdeckplatte (3) nach einem der vorhergehenden Ansprüche, **dadurch gekennzeichnet, dass** das Glas- oder Glaskeramiksubstrat und die Beschichtung (2) zusammen einen Haze von weniger als 5 %, bevorzugt weniger als 2%, besonders bevorzugt weniger als 1%, gemessen gemäß ASTM-D1003.

11. Abdeckplatte (3) nach einem der vorhergehenden Ansprüche, **dadurch gekennzeichnet, dass** die Beschichtung (2) aus einem der folgenden Materialsysteme besteht: Spinelle, Cermets, Carbide oder Carbonitride.

12. Abdeckplatte (3) nach dem vorhergehenden Anspruch 11, **dadurch gekennzeichnet, dass** die Beschichtung (2) aus einem Spinell aus einem der folgenden Materialsysteme besteht: Aluminiumspinelle, Chromspinelle, Eisenspinelle, Titanspinelle, Kobaltspinelle oder CoFeMnCr-Spinelle.

13. Abdeckplatte (3) nach Anspruch 11, **dadurch gekennzeichnet, dass** die Beschichtung (2) aus einem Cermet mit einer oxidischen Matrix aus $SiO_2$, $Al_2O_3$, $ZrO_2$, $TiO_2$ oder Mischoxiden davon und einer metallischen Komponente aus Ti, Si, Al, Mo, Zr, Cu, Nb, Co, Cr, W, Ta, Ni, B oder einer Legierung aus wenigstens zweier dieser Metalle besteht.

14. Abdeckplatte (3) nach dem vorhergehenden Anspruch 11, **dadurch gekennzeichnet, dass** die Beschichtung (2) aus einem $MoSiO_x$-Cermet besteht.

**Claims**

1. Cover panel (3) for a fitout article or article of equipment (1) for a kitchen or laboratory, comprising a glass or glass ceramic substrate and a coating (2) on one side of the glass or glass ceramic substrate,

   wherein the glass or glass ceramic substrate and the coating (2) together have a light transmittance of 1% to 70%, wherein the coating (2) has a colour locus in the CIELAB colour space with the coordinates L* of 20 to 65 and a* of -6 to 6 and b* of -6 to 6, measured in reflectance with D65 standard illuminant light against a black trap in transmission through the glass or glass ceramic substrate,
   wherein the colour locus of the D65 standard illuminant light, after passing through the glass or glass ceramic substrate and the coating (2), is within a white region W1 determined in the chromaticity diagram CIExyY-2° by the following coordinates:

| White region W1 | |
| --- | --- |
| x | y |
| 0.27 | 0.21 |
| 0.22 | 0.25 |
| 0.32 | 0.37 |
| 0.45 | 0.45 |
| 0.47 | 0.34 |
| 0.36 | 0.29 |

wherein the cover panel does not include a black-body compensation filter.

2. Cover panel (3) according to any of the preceding claims, **characterized in that** the coating (2) has a colour locus in the CIELAB colour space with the coordinates $22 \leq L^* \leq 35$, preferably $25 \leq L^* \leq 30$, more preferably $26 \leq L^* \leq 28$, with $-4 \leq a^* \leq 4$, preferably $-2 \leq a^* \leq 2$, and with $-4 \leq b^* \leq 4$, preferably $-2 \leq b^* \leq 2$, measured in reflectance with D65 standard illuminant light against a black trap in transmission through the glass or glass ceramic substrate.

3. Cover panel (3) according to any of the preceding claims, **characterized in that** the coating (2) has a colour locus in the CIELAB colour space with the coordinates $45 \leq L^* \leq 65$, preferably $50 \leq L^* \leq 60$, more preferably $54 \leq L^* \leq 59$, $-4 \leq a^* \leq 4$, preferably $-2 \leq a^* \leq 2$, and with $-4 \leq b^* \leq 4$, preferably $-2 \leq b^* \leq 2$, measured in reflectance with D65 standard illuminant light against a black trap in transmission through the glass or glass ceramic substrate.

4. Cover panel (3) according to any of the preceding claims, **characterized in that** the colour locus of the D65 standard illuminant light, after passing through the glass or glass ceramic substrate and the coating (2), is within a white region W2 determined in the chromaticity diagram CIExyY-2° by the following coordinates:

| White region W2 | |
| --- | --- |
| x | y |
| 0.25 | 0.27 |
| 0.32 | 0.36 |
| 0.41 | 0.42 |
| 0.42 | 0.36 |
| 0.35 | 0.31 |
| 0.27 | 0.24 |

5. Cover panel (3) according to any of the preceding claims, **characterized in that** the glass or glass ceramic substrate together with the coating (2) has a transmission at a wavelength of 1500 nm of at least 30%, preferably at least 45%, more preferably at least 70%, and/or has a transmission at at least one wavelength in the range between 850 nm and 1000 nm of at least 3%, preferably at least 10%, more preferably at least 30% and/or a transmission at at least one wavelength in the range between 3.25 $\mu$m and 4.25 $\mu$m of at least 10%, preferably at least 20%, more preferably at least 30%.

6. Cover panel (3) according to any of the preceding claims, **characterized in that** the glass or glass ceramic substrate is a glass ceramic substrate having a coefficient of thermal expansion CTE between 20 and 300°C of less than $\pm 2.5 \times 10^{-6}$/K or a glass substrate having a coefficient of thermal expansion CTE between 20 and 300°C of 3.5 to 6 $\times 10^{-6}$/K and a glass transition temperature $T_g$ of 500 to 650°C, especially of 550 to 650°C.

7. Cover panel (3) according to any of the preceding claims, **characterized in that** the coating (2) has a sheet resistance of at least 1 k$\Omega$/$\square$, preferably at least 0.5 M$\Omega$/$\square$, more preferably at least 2 M$\Omega$/$\square$, at a test voltage of 1000 V.

8. Cover panel (3) according to any of the preceding claims, **characterized in that** the coating (2) has an average spectral reflectance in the wavelength range of 380 to 780 nm of at most 10%, preferably at most 8%, measured in transmission through the glass or glass ceramic substrate.

9. Cover panel (3) according to the preceding Claim 9, **characterized in that** the ratio of highest spectral reflectance to lowest spectral reflectance in the wavelength range of 380 to 780 nm has a value from 1 to 5, preferably from 1 to 3 and more preferably from 1 to 2.

10. Cover panel (3) according to any of the preceding claims, **characterized in that** the glass or glass ceramic substrate and the coating (2) together exhibit a haze of less than 5%, preferably less than 2%, more preferably less than 1%, measured according to ASTM-D1003.

11. Cover panel (3) according to any of the preceding claims, **characterized in that** the coating (2) consists of one of the following material systems: spinels, cermets, carbides or carbonitrides.

**12.** Cover panel (3) according to the preceding Claim 11, **characterized in that** the coating (2) consists of a spinel from one of the following material systems: aluminium spinels, chromium spinels, iron spinels, titanium spinels, cobalt spinels or CoFeMnCr spinels.

**13.** Cover panel (3) according to Claim 11, **characterized in that** the coating (2) consists of a cermet with an oxidic matrix composed of $SiO_2$, $Al_2O_3$, $ZrO_2$, $TiO_2$ or mixed oxides thereof and a metallic component composed of Ti, Si, Al, Mo, Zr, Cu, Nb, Co, Cr, W, Ta, Ni, B or an alloy of at least two of these metals.

**14.** Cover panel (3) according to the preceding Claim 11, **characterized in that** the coating (2) consists of an $MoSiO_x$ cermet.

**Revendications**

**1.** Plaque de recouvrement (3) destinée à un objet d'ameublement ou d'équipement (1) destiné à une cuisine ou un laboratoire, ladite plaque comprenant un substrat en verre ou en vitrocéramique et un revêtement (2) sur une face du substrat en verre ou en vitrocéramique,

le substrat en verre ou en vitrocéramique et le revêtement (2) ayant conjointement une transmission lumineuse de 1 % à 70 %,
le revêtement (2) ayant dans l'espace colorimétrique CIELAB une localisation chromatique dont les coordonnées L* vont de 20 à 65, a* de -6 à 6 et b* de -6 à 6, mesurées en rémission avec la lumière du type éclairage normalisé D65 vers un piège noir, vue à travers le substrat en verre et en vitrocéramique,
la localisation chromatique de la lumière du type éclairage normalisé D65 après passage à travers le substrat en verre et en vitrocéramique et le revêtement (2) étant située dans une zone blanche W1 qui est déterminée dans le diagramme de chromaticité CIExyY-2° par les coordonnées suivantes :

| Zone blanche W1 | |
|---|---|
| x | y |
| 0,27 | 0,21 |
| 0,22 | 0,25 |
| 0,32 | 0,37 |
| 0,45 | 0,45 |
| 0,47 | 0,34 |
| 0,36 | 0,29 |

la plaque de recouvrement ne comprenant pas de filtre de compensation de corps noir.

**2.** Plaque de recouvrement (3) selon l'une des revendications précédentes, **caractérisée en ce que** le revêtement (2) a dans l'espace colorimétrique CIELAB une localisation chromatique de coordonnées $22 \leq L^* \leq 35$, de préférence $25 \leq L^* \leq 30$, de manière particulièrement préférée $26 \leq L^* \leq 28$, avec $-4 \leq a^* \leq 4$, de préférence $2 \leq a^* \leq 2$ et $-4 \leq b^* \leq 4$, de préférence $-2 \leq b^* \leq 2$, mesurées en rémission avec la lumière du type éclairage normalisé D65 vers un piège noir, vue à travers le substrat en verre et en vitrocéramique.

**3.** Plaque de recouvrement (3) selon l'une des revendications précédentes, **caractérisée en ce que** le revêtement (2) a dans l'espace colorimétrique CIELAB une localisation chromatique de coordonnées $45 \leq L^* \leq 65$, de préférence $50 \leq L^* \leq 60$, de manière particulièrement préférée $54 \leq L^* \leq 59$, avec $-4 \leq a^* \leq 4$, de préférence $2 \leq a^* \leq 2$ et $-4 \leq b^* \leq 4$, de préférence $-2 \leq b^* \leq 2$, mesurées en rémission avec la lumière du type éclairage normalisé D65 vers un piège noir, vue à travers le substrat en verre et en vitrocéramique.

**4.** Plaque de recouvrement (3) selon l'une des revendications précédentes, **caractérisée en ce que** la localisation de la lumière du type éclairage normalisé D65 après passage à travers le substrat en verre ou en vitrocéramique et le revêtement (2) est située dans une zone blanche W2, qui est déterminée dans le diagramme de chromaticité CIExyY-2° par les coordonnées suivantes :

| Zone blanche W2 | |
|---|---|
| x | y |
| 0,25 | 0,27 |
| 0,32 | 0,36 |
| 0,41 | 0,42 |
| 0,42 | 0,36 |
| 0,35 | 0,31 |
| 0,27 | 0,24 |

5. Plaque de recouvrement (3) selon l'une des revendications précédentes, **caractérisée en ce que** le substrat en verre ou en vitrocéramique a, conjointement avec le revêtement (2) à une longueur d'onde de 1500 nm, une transmission d'au moins 30 %, de préférence d'au moins 45 %, de manière particulièrement préférée d'au moins 70 % et/ou à au moins une longueur d'onde dans la gamme comprise entre 850 nm et 1000 nm une transmission d'au moins 3 %, de préférence d'au moins 10 %, de manière particulièrement préférée d'au moins 30 % et/ou à au moins une longueur d'onde dans la gamme comprise entre 3,25 $\mu$m et 4,25 $\mu$m une transmission d'au moins 10 %, de préférence d'au moins 20 %, de manière particulièrement préférée d'au moins 30 %.

6. Plaque de recouvrement (3) selon l'une des revendications précédentes, **caractérisée en ce que** le substrat en verre ou en vitrocéramique est un substrat vitrocéramique ayant un coefficient de dilatation thermique CTE compris entre 20 et 300 °C inférieur à $\pm$ 2,5 $\times$ 10$^{-6}$/K ou un substrat en verre ayant un coefficient de dilatation thermique CTE compris entre 20 et 300 °C de 3,5 à 6 $\times$10$^{-6}$/K et une température de transition vitreuse $T_g$ de 500 à 650 °C, notamment de 550 à 650 °C.

7. Plaque de recouvrement (3) selon l'une des revendications précédentes, **caractérisée en ce que** le revêtement (2) a une résistance par carré d'au moins 1 k$\Omega$/$\square$, de préférence d'au moins 0,5 M$\Omega$/$\square$, de manière particulièrement préférée d'au moins 2 M$\Omega$/$\square$ à une tension d'essai de 1000 V.

8. Plaque de recouvrement (3) selon l'une des revendications précédentes, **caractérisée en ce que** le revêtement (2) a une réflectance spectrale moyenne dans la gamme de longueurs d'onde de 380 à 780 nm d'au plus 10 %, de préférence d'au plus 8 % mesurée lorsqu'il est vu à travers le substrat en verre ou en vitrocéramique.

9. Plaque de recouvrement (3) selon la revendication précédente 9, **caractérisée en ce que** le rapport de la réflectance spectrale la plus élevée à la réflectance spectrale la plus faible dans la gamme de longueurs d'onde de 380 à 780 nm a une valeur de 1 à 5, de préférence de 1 à 3 et de manière particulièrement préférée 1 à 2.

10. Plaque de recouvrement (3) selon l'une des revendications précédentes, **caractérisée en ce que** le substrat en verre ou en vitrocéramique et le revêtement (2) conjointement ont un trouble inférieur à 5 %, de préférence inférieur à 2 %, de manière particulièrement préférée inférieur à 1 %, mesuré selon ASTM-D1003.

11. Plaque de recouvrement (3) selon l'une des revendications précédentes, **caractérisée en ce que** le revêtement (2) comprend un des systèmes de matériaux suivants : spinelles, cermets, carbures ou carbonitrures.

12. Plaque de recouvrement (3) selon la revendication précédente 11, **caractérisée en ce que** le revêtement (2) comprend un spinelle de l'un des systèmes de matériaux suivants : spinelles d'aluminium, spinelles de chrome, spinelles de fer, spinelles de titane, spinelles de cobalt ou spinelles de CoFeMnCr.

13. Plaque de recouvrement (3) selon la revendication 11, **caractérisée en ce que** le revêtement (2) comprend un cermet comprenant une matrice d'oxyde parmi $SiO_2$, $Al_2O_3$, $ZrO_2$, $TiO_2$ ou leurs oxydes mixtes et un composant métallique parmi Ti, Si, Al, Mo, Zr, Cu, Nb, Co, Cr, W, Ta, Ni, B ou un alliage d'au moins deux de ces métaux.

**14.** Plaque de recouvrement (3) selon la revendication précédente 11, **caractérisée en ce que** le revêtement (2) comprend un cermet $MoSiO_x$.

Figur 1a

Figur 1b

Figur 2

Figur 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102016103524 A1
- US 2007108184 A1
- EP 3208545 A1
- EP 202011110029 U1
- DE 102009013127 A1